# EUROPEAN PATENT SPECIFICATION

(11) **EP 3 636 505 B1**
(45) Date of publication and mention of the grant of the patent: **01.05.2024**
(21) Application number: 18805584.2
(22) Date of filing: 24.05.2018
(51) Int. Cl.: B60W 10/04, B60W 10/06, B60W 10/11, B60W 10/111, B60W 30/188, F02D 29/00, F16D 11/10, F16H 3/083, B60W 30/19, B60W 30/20, F16H 63/50

(54) **VEHICLE**
FAHRZEUG
VÉHICULE

(30) Priority: 24.05.2017 JP 2017102479
(43) Date of publication of application: 15.04.2020
(73) Proprietor: Yamaha Hatsudoki Kabushiki Kaisha, Iwata-shi, Shizuoka 438-8501 (JP)
(72) Inventor: MURAYAMA, Yasunori, Iwata-shi Shizuoka 438-8501 (JP); IWAKI, Yohei, Iwata-shi Shizuoka 438-8501 (JP); KOZU, Daisuke, Iwata-shi Shizuoka 438-8501 (JP); HARANO, Kazuya, Iwata-shi Shizuoka 438-8501 (JP); IIZUKA, Shinya, Iwata-shi Shizuoka 438-8501 (JP)
(74) Representative: Zimmermann, Tankred Klaus
(86) International application number: PCT/JP2018/019949
(87) International publication number: WO 2018/216758

(56) References cited:
- EP-B1- 2 451 686
- JP-A- 2007 016 886
- JP-A- 2008 144 755
- JP-A- 2011 111 133
- JP-A- 2012 026 287
- JP-A- 2017 044 072
- US-A1- 2007 021 268

## Description

### Technical Field

The present invention relates to a vehicle.

### Background Art

Vehicles driven by power from a drive source encompass vehicles including transmission members provided to have backlash therebetween and configured to be engaged with each other to allow power transmission. A known example of such a vehicle is a vehicle including a dog-type stepped transmission device. The dog-type stepped transmission device includes, as the transmission members, two or more types of dog elements. For example, the two or more types of dog elements include first dog elements provided on driving gears or driven gears. The two or more types of dog elements further include second dog elements engageable with the first dog elements. The first dog elements and the second dog elements move relative to each other in a direction in which a rotating shaft of the driving gear extends, so that the first dog elements and the second dog elements are engaged with each other or disengaged from each other. In this manner, effective driving gear and driven gear are selected. In a state where the first dog elements and the second dog elements are engaged with each other, the first dog elements and the second dog elements have backlash therebetween in a circumferential direction. The backlash between the first dog elements and the second dog elements in the circumferential direction has enough size to allow smooth shifting of gear stages.

There are cases where a shock to the vehicle is caused by the backlash between the dog elements when a driving state of the drive source is changed. For example, a shock may occur when the state of the drive source is switched from a deceleration state (e.g., a state where engine braking is operating) to an acceleration state with the dog elements engaged with each other. For example, when the state of the drive source is switched from the deceleration state to the acceleration state, the following phenomenon occurs. That is, a first dog element interposed between two adjacent second dog elements moves away from one of the two adjacent second dog elements (the non-transmission state), and moves for a distance corresponding to the backlash while being accelerated. Then, the first dog element comes in contact with the other of the two adjacent second dog elements, which is located opposed to the one of the two adjacent second dog elements (the transmission state resulting from the dog engagement). Thus, during a period in which the transmission state, which allows power transmission, is switched to the non-transmission state, which does not allow power transmission, and then is switched back to the transmission state, an angular momentum accumulated in the first dog element in the non-transmission state increases due to acceleration. As a result of re-contact that causes switching of the state from the non-transmission state to the transmission state, the increased angular momentum is transmitted.

This increases an amount of change in torque outputted from the stepped transmission device at the time of re-contact, as compared with a case where the dog elements are provided without backlash, for example. The change in torque is transmitted to the driving wheel, which causes a shock to the vehicle ultimately.

A technique has been proposed for suppressing a shock that may otherwise be generated by the backlash.

For example, PTL 1 discloses an acceleration/deceleration control apparatus configured to reduce at least one of a contact speed or a transmission torque between power transmission members when backlash between the power transmission members is gone upon acceleration or deceleration. The acceleration/deceleration control apparatus detects information related to a rotational speed of an input shaft, which is a specific controlled section in a power transmission path, and calculates a relative rotational position between the input shaft and an output shaft based on the information related to the rotational speed. Based on the relative rotational position thus calculated, the acceleration/deceleration control apparatus accelerates or decelerates at least one of the input shaft or the output shaft so as to reduce at least one of the contact speed or the transmission torque.

More specifically, when the deceleration state is switched to the acceleration state, for example, the acceleration/deceleration control apparatus of PTL 1 reduces the rotational speed of the input shaft based on an estimated calculation value of the relative rotational position. Consequently, the acceleration/deceleration control apparatus brings about almost no relative rotational speed between the input shaft and the output shaft at the time of re-contact.

With the acceleration/deceleration control apparatus of PTL 1, it is possible to reduce the speed of re-contact between the power transmission members, such as dog elements, at the time of re-contact or the transmission torque at that time. In addition, with the acceleration/deceleration control apparatus of PTL 1, it is also possible to suppress a reduction in acceleration performance.

PTL 2 discloses a method and apparatus for estimating a transmission ratio of a power transmission path defined between input and output shafts is provided. The method includes detecting a rotational speeds of the input and output shafts, calculating a rotational-speed ratio between the detected rotational speeds of the input and output shafts, determining whether or not a difference between the rotational-speed ratio calculated at a certain time and a rotational-speed ratio calculated earlier is within a first threshold, and estimating a value relating to the later rotational-speed ratio to be the transmission ratio and storing the value in a memory if the difference between the rotational-speed ratios is determined to be within the first threshold, while estimating a value relating to the earlier rotational-speed ratio stored in the memory to be the transmission ratio if the difference between the rotational-speed ratios is determined not to be within the first threshold.

PTL 3 discloses a method for controlling output torque of a propulsion unit in a vehicle powertrain comprising driven wheels drivingly connected to said propulsion unit via a mechanical transmission with a drive shaft, wherein said method comprising the steps of registering driver torque demand for vehicle propulsion, registering propulsion unit rotational speed, and controlling said output torque of said propulsion unit to asymptotically follow said driver torque demand using a closed-loop linear-quadratic regulator based controller having said driver torque demand and said propulsion unit rotational speed as input data, in order to minimize driveline oscillations.

### Citation List

### Patent Literature

PTL 1: Japanese Patent No. 4722470
PTL 2: US Patent Application Publication No. 2007/0021268
PTL 3: European Patent No. 2 451 686

### Summary of Invention

### Technical Problem

However, the vehicles including the transmission members provided to have backlash therebetween are required to achieve a higher acceleration or deceleration response. Namely, such vehicles are required to suppress a shock that may be generated by the backlash between the transmission members when the state of the drive source is changed, and are also required to achieve a further improved acceleration or deceleration response.

An object of the present invention is to provide a vehicle including transmission members provided to have backlash therebetween, wherein the vehicle can suppress a shock that may otherwise be generated by the backlash between the transmission members when a state of a drive source is changed, and has a further improved acceleration or deceleration response.

### Solution to Problem

The acceleration/deceleration control apparatus of PTL 1 calculates the relative rotational position, and reduces the rotational speed of the input shaft based on the relative rotational position, for example. Namely, the acceleration/deceleration control apparatus of PTL 1 reduces a speed difference between the dog elements that may occur at the time of re-contact between the dog elements, i.e., at the time of dog engagement. That is to say, an idea of PTL 1 is to avoid collision itself between the dog elements, i.e., contact between the dog elements moving at different speeds.

Specifically, the acceleration/deceleration control apparatus of PTL 1 minimizes a relative rotational speed between the input shaft and the output shaft and a transmission torque therebetween at the time of re-contact. For example, the acceleration/deceleration control apparatus of PTL 1 brings about almost no relative rotational speed at the time of re-contact. Provided that there is almost no relative rotational speed between the input shaft and the output shaft at the time of re-contact, almost no torque would be transmitted between the power transmission members at the time of re-contact. The feature of PTL 1 of bringing about the state where there is almost no transmission torque between the power transmission members at the time of re-contact can be deemed almost the same as bringing about a state where there is almost no relative rotational speed between the shaft and the output at the time of re-contact. The method disclosed in PTL 2 and PTL 3 is similar to the feature disclosed in PTL 1.

The inventors of the present invention studied again the fundamental mechanism of how a shock to the vehicle is generated due to the backlash between the transmission members, such as the dog elements, when the acceleration state or the deceleration state of the drive source is changed.

A shock is caused by a speed difference between the first and second dog elements at the time of re-contact (dog engagement) therebetween. Namely, when the state of the drive source is switched from the deceleration state to the acceleration state, for example, a first dog element interposed between two adjacent second dog elements moves away from one of the two adjacent second dog elements, travels for a distance corresponding to the backlash while being accelerated, and then comes in contact with the other of the two adjacent second dog elements. Due to a speed difference between the first and second dog elements at the time of the contact, a shock is generated.

An angular momentum caused by the speed difference is supplied mainly from the drive source. The angular momentum is related to an energy. More specifically, the angular momentum is determined by the product of the speed difference (angular speed difference) and an inertia. Examples of members related to the inertia encompass the drive source, a clutch, and the input shaft of the transmission device. Among these, the drive source has the largest inertia. Hereinafter, the inertia associated with the source of the angular momentum may sometimes be simply referred to as an inertia of the drive source, representatively. The angular momentum caused by the above-described speed difference can be rephrased as an angular momentum caused by the inertia of the drive source.

In the stepped transmission device, the angular momentum caused by the inertia of the drive source is transmitted through, e.g., the input shaft, the first dog elements, and the second dog elements, and then is outputted from the output shaft. The angular momentum outputted from the stepped transmission device is supplied to the driven member (e.g., the driving wheel) through the power transmission path. The angular momentum caused by the inertia of the drive source emerges as a change in rotational speed of the driven member, and ultimately emerges as a change in speed of the vehicle, i.e., as a shock.

As described above, the angular momentum generated by the speed difference between the first and second dog elements is transmitted through many components until the angular momentum emerges as a shock to the vehicle. In addition, the vehicle has its own weight. Therefore, a component disposed downstream of the second dog elements in the path in which power is transmitted also has an inertia. Thus, from a microperspective view, the angular momentum caused by the inertia of the drive source is supplied over a certain period starting from the time of the dog engagement.

The period taken to supply the angular momentum caused by the inertia of the drive source is affected by the rigidity (flexibility) of the path in which power is transmitted. Part of the angular momentum supplied from the drive source is absorbed by deformation of a member for transmitting power, and another part of the angular momentum is transmitted with delay. For example, part of the angular momentum supplied from the drive source is temporarily absorbed by, e.g., a damper element in a power transmission path extending from the output shaft to the driving wheel. For example, the damper element is attained by deformation of a hub damper provided to a hub of the driving wheel. In addition, part of the angular momentum from the drive source is absorbed by minute deformation of a member other than the hub damper in the power transmission path as well as by a minute friction between the driving wheel and the road surface. The angular momentum supplied over the certain period due to the characteristics of the transmission path emerges as a shock to the vehicle.

As described above, the angular momentum from the drive source is supplied over the certain period starting from the time of the dog engagement, and is ultimately turned into a change in speed of the vehicle. More specifically, the angular momentum supplied via the two types of dog elements having established dog engagement is represented by the value obtained by time-integrating, in the certain period, the torque transmitted after the dog engagement. Meanwhile, while the vehicle is being accelerated, even if there is no acceleration caused by the backlash between the above-described dog elements, the supplied angular momentum changes due to, e.g., an increase in fuel consumption of the drive source. However, the change in angular momentum caused by the increase in fuel consumption for the certain period is smaller than the angular momentum caused by the inertia of the drive source. In view of this, the following will discuss, as a cause of the shock, the angular momentum caused by the backlash between the dog elements.

Instead of the method for suppressing a shock by bringing about, at the time of dog engagement, a state where there is almost no speed difference between the two types of dog elements, the inventors of the present invention sought for a method for suppressing a shock on the premise that there exists a speed difference between the two types of dog elements at the time of dog engagement. Namely, the inventors of the present invention sought for a way to reduce a torque supplied from the drive source at the time of the dog engagement or after the time of the dog engagement.

For example, by reducing a drive source torque in a period from the time of dog engagement to the time at which the angular momentum caused by the speed difference between the two types of dog elements emerges as a change in speed of the vehicle, it is possible to suppress the torque due to the speed difference between the first and second dog elements and the inertia of the drive source, the torque being combined with a torque supplied from the drive source and transmitted. This can suppress a shock to the vehicle.

The inventors of the present invention have designed a control device such that the control device ends a power reduction process after a time at which the state is switched from one to another due to dog engagement. More specifically, the inventors of the present invention tentatively set a time to start the power reduction process so that the time is equal to or prior to the time of switching of the state, and set a time to end the power reduction process so that the time is after the time of switching of the state. Consequently, the inventors of the present invention found that this can suppress a shock to the vehicle that may be caused by the backlash between the dog elements when the state of the drive source is changed. In addition, since the time to start the process is controlled to be equal to or prior to the time of switching of the state, it is not necessary to reduce the torque for a long period prior to dog engagement, unlike the method of bringing about the state where there is almost no relative speed at the time of dog engagement. Thus, the inventors of the present invention found that controlling the times in the above-described manner can further improve the acceleration or deceleration response while suppressing a shock. The inventors of the present invention found that this is applicable not only to the vehicles including the dog elements but also to vehicles including transmission members provided to have backlash therebetween.

Based on the above-described findings, a vehicle according to claim 1 is provided. Preferred embodiments are set forth in the dependent claims.

This Description describes a novel vehicle. In the description given below, for the purposes of explanation, numerous specific details are set forth in order to provide a thorough understanding of the present invention. It will be apparent, however, that those skilled in the art may practice the present invention without these specific details. The description is to be considered as an exemplification of the present invention, and is not intended to limit the scope of the invention to the specific embodiments illustrated by drawings or descriptions below. The scope of the invention is defined by the appended claims.

The first transmission member and the second transmission member provided to have backlash therebetween are the dog elements, for example. The first transmission member and the second transmission member disposed in the power transmission path are the first dog elements and the second dog elements, for example. The engagement between the first transmission member and the second transmission member is dog engagement between the first dog elements and the second dog elements, for example.

Assume that the second dog elements are arranged in the circumferential direction at spaces each being longer in length than each of the first dog elements when viewed in the circumferential direction and each of the first dog elements is interposed between adjacent ones of the second dog elements. In this arrangement, a space between the first dog element and the second dog element arranged side by side corresponds to backlash (i.e., a backlash between the transmission members). For example, when the state of the drive source is switched from the deceleration state to the acceleration state, the following situation occurs. That is, the first dog element between the two adjacent second dog elements moves away from one of the two adjacent second dog elements, and then comes in contact with the other of the two adjacent second dog elements, which is located opposed to the one of the two adjacent second dog elements. Thus, the first dog element and the second dog element are engaged with each other. A distance for which the first dog element moves between the one of the two adjacent second dog elements and the other of the two adjacent second dog elements, which is located opposed to the one of the two adjacent second dog elements, corresponds to the backlash.

It should be noted that the first transmission member and the second transmission member are not particularly limitative. The first transmission member and the second transmission member may be teeth of gears, for example. The backlash between the first transmission member and the second transmission member may be looseness (slack) between gears, for example. The first transmission member and the second transmission member may be disposed outside the stepped transmission device. The first transmission member and the second transmission member may be chains, sprockets, or splines, for example.

For example, the first dog elements of the stepped transmission device are provided to the driving gears or the driven gears. The second dog elements configured to be in contact with the first dog elements in the circumferential direction with backlash each have a shape allowing the second dog element to be accommodated in a space between first dog elements that are adjacent to the second dog element in the circumferential direction while having backlash with respect to the first dog elements. In addition, the second dog elements are provided such that each of the second dog elements can move in the circumferential direction relative to a corresponding one of the first dog elements to come in contact with the corresponding one of the first dog elements in the circumferential direction. The second dog elements may be provided to the driving gears or the driven gears. Alternatively, the second dog elements may be provided to the dog rings, which are not the driving gears or the driven gears. The first dog elements and the second dog elements may be protrusions. Alternatively, one of the first dog elements and the second dog elements may be portions of a sidewall that define holes in which the other of the first dog elements and the second dog elements can be inserted. Further alternatively, one of the first dog elements and the second dog elements may be portions of a sidewall that define grooves along which the other of the first dog elements and the second dog elements can be fitted. The gear-stage setting mechanism includes the first dog elements and the second dog elements associated with their corresponding gear stages. This does not necessarily mean that the gear-stage setting mechanism includes the first dog elements and the second dog elements respectively provided for the gear stages. The gear-stage setting mechanism only needs to include the first dog elements and the second dog elements that enable operation for mechanically selecting, from among the patterns of power transmission for the gear stages, an effective pattern of power transmission. For example, a single dog ring serving as the second dog elements may be provided for two gear stages.

The circumferential direction in which the first dog elements and the second dog elements come in contact with each other is along a rotational direction of the driving gears or the driven gears to which the first dog elements are provided.

Assume that driving gears are provided rotatably relative to an input shaft. In this case, a driving gear to which power is inputted via the input shaft can be selected by, e.g., a first transmission member and a second transmission member disposed in a power transmission path extending between the input shaft and the driving gears. Meanwhile, assume that a hub is provided between an input shaft and driving gears, for example. In this case, power to be transmitted to a driving gear via the input shaft can be selected by, e.g., a first transmission member and a second transmission member disposed in a power transmission path extending between the hub and the driving gears. In this case, the power is transmitted between the input shaft and the hub, e.g., via a ratchet mechanism.

Power to be transmitted from a driven gear toward the output shaft can be selected by, e.g., the first transmission member and the second transmission member disposed in a power transmission path extending between the driven gears and the output shaft. Meanwhile, assume that a hub is provided between driven gears and an output shaft, for example. In this case, power to be transmitted from a driven gear toward the output shaft can be selected by, e.g., a first transmission member and a second transmission member disposed in a power transmission path between the hub and the driven gears. In this case, the power is transmitted between the output shaft and the hub, e.g., via a ratchet mechanism. The "hub" herein refers to a tubular member provided radially outside a shaft (the input shaft or the output shaft), coaxially with the shaft, and rotatably relative to the shaft. The "gear" (the driving gears or the driven gears) is provided radially outside the hub, coaxially with the hub, and rotatably relative to the hub.

The process for changing the time to start at least one of the power reduction process or the power increase process may be executed either during or not during a shifting operation performed by the stepped transmission device.

The time to start at least one of the power reduction process or the power increase process or the time to end the at least one of the power reduction process or the power increase process can be observed by, e.g., measurement of a signal indicative of an instruction value for reducing or increasing power which signal is outputted from the control device. Alternatively, the time to start at least one of the power reduction process or the power increase process or the time to end at least one of the power reduction process or the power increase process can be observed by, e.g., measurement of a delay amount of an ignition time in a combustion cycle of the engine.

A time X to start at least one of the power reduction process or the power increase process is different from a time X' at which power outputted from the drive source actually decreases or increases due to the process. For example, the time X is earlier than the time X'.

Phenomena obtained by controlling the time X to be equal to or prior to a time Z at which the non-transmission state is switched to the acceleration transmission state or the deceleration transmission state include a phenomenon that the time X' coincides with the time Z, for example.

The phenomena obtained by controlling the time X to be equal to or prior to the time Z also include a phenomenon where the time X' is earlier than the time Z, for example.

The phenomena obtained by controlling the time X to be equal to or prior to the time Z also include a phenomenon that the time X' is later than the time Z, for example.

Meanwhile, a time Y to end at least one of the power reduction process or the power increase process is different from a time Y' at which a torque outputted from the drive source actually decreases or increases as a result of the ending of the process.

By controlling the time Y to be later than the time Z, the time Y becomes later than the time Z, for example.

A time interval between the time X' and the time Z is preferably shorter than a time interval between the time X and the time Z. In addition, the time interval between the time X and the time Z is preferably shorter than a time interval between the time Y and the time Z. Furthermore, the time interval between the time X' and the time Z is preferably shorter than a time interval between the time Y' and the time Z. With this, suppression of a shock and enhancement of the acceleration response can be achieved at a higher level.

The power reduction process performed by the control device refers to a process for reducing a torque to be outputted from the drive source, for example. The power increase process performed by the control device refers to a process for increasing a torque to be outputted from the drive source, for example. However, the power reduction process and the power increase process are not particularly limitative. Alternatively, for example, in a case of a vehicle including a power transmission path in which a second drive source is provided between a first or second transmission member and a driven member, the power reduction process may be, e.g., a process for increasing a torque to be transmitted from the second drive source. In addition, the power increase process may be, e.g., a process for reducing a torque to be outputted from the second drive source.

Examples of the drive source encompass an engine and an electric motor. Namely, examples of the vehicle encompass an engine vehicle, an electric motor vehicle, and a hybrid vehicle driven by an engine and an electric motor.

The torque detector is configured to detect a torque-related amount. The torque-related amount refers to a physical quantity related to an output torque from the drive source. As the output torque from the drive source increases, the torque-related amount increases. Meanwhile, as the output torque from the drive source decreases, the torque-related amount decreases. The torque-related amount is a combination of an opening angle of the throttle valve and a speed of the power shaft, for example. The output torque from the drive source is represented by a combination of the opening angle of the throttle valve and the speed of the power shaft. For example, the speed of the power shaft cannot solely be the torque-related amount, since the speed of the power shaft cannot uniquely represent the output torque from the drive source.

The torque-related amount related to the transmission torque may be, e.g., a torque inputted into, of the first transmission member and the second transmission member, the one closer to the drive source. However, the torque-related amount related to the transmission torque is not limitative. For example, the torque-related amount may be the output torque from the drive source. In this case, the output torque serving as the torque-related amount is detected by, e.g., a detector including a torque sensor provided to the power shaft.

Alternatively, the torque-related amount may be an output torque obtained based on a combination of the opening angle of the throttle valve and the speed of the power shaft, for example.

Further alternatively, the torque-related amount may be both of the combination of the opening angle of the throttle valve and the speed of the power shaft and the output torque obtained based on this combination.

The torque detector includes a throttle opening detector and a power shaft speed detector, for example. In this configuration, a torque outputted from the drive source can be obtained by indirect detection, such as by calculation using an opening angle of the throttle valve and a speed of the power shaft or by reference to a map. Alternatively, for example, the torque detector may be a detector provided to the power shaft or the clutch and configured to directly detect a torque. In a configuration including an electric motor as the drive source, the torque detector may be a detector for detecting an electric current supplied to an electric motor, for example. In this configuration, a torque outputted from the drive source can be obtained by indirect detection involving use of an electric current.

As the torque-related amount, a plurality of parameters or a single parameter may be used. The parameter used as the torque-related amount may be, e.g., a parameter used to determine or change an output torque from the drive source or a parameter to be determined or changed based on a torque outputted from the drive source. Examples of the parameter used to determine or change the output torque from the drive source encompass a parameter inputted to the drive source by a rider and a parameter related to an operating environment of the drive source. Examples of the parameter inputted to the drive source by the rider encompass an amount of manipulation of an accelerator operator. Examples of the parameter related to the operating environment of the drive source encompass an intake pressure, an amount of air, an opening angle of the throttle valve, and an explosion interval. Examples of the parameter to be determined or changed based on the torque outputted from the drive source encompass a speed of the power shaft and a crank angle.

The phenomenon that the rotational speed of the power input shaft and the speed of the vehicle synchronize with each other corresponds to, e.g., a phenomenon that a value indicating a rotational speed of the power input shaft is substantially identical to a value of a rotational speed of the power input shaft obtained by conversion of a speed of the vehicle performed based on a stationary gear ratio of the entire power transmission path.

For example, during constant speed running, the value of the rotational speed of the power input shaft is substantially identical to the conversion value of the speed of the vehicle. However, in a case where the transmission members provided in the power transmission path are in the non-transmission state or in a case where these transmission members are in the transmission state and the damper is being deformed, for example, the value of the rotational speed of the power input shaft is different from the conversion value of the speed of the vehicle. Typically, as time advances after the state is switched to the acceleration state or the deceleration state, the value of the rotational speed of the power input shaft becomes substantially identical to the conversion value of the speed of the vehicle. The phenomenon that the value of the rotational speed of the power input shaft becomes substantially identical to the conversion value of the speed of the vehicle means that a difference between these values is smaller than a predetermined reference value. Here, the predetermined reference value indicates whether the speed difference is within a predetermined variation range defined assuming constant speed running, for example.

The conversion of the speed is not particularly limitative. For example, the phenomenon that the rotational speed of the power input shaft and the speed of the vehicle synchronize with each other may correspond to, e.g., a phenomenon that a value of a rotational speed of the power shaft of the drive source obtained by conversion of a rotational speed of the power input shaft is substantially identical to a value of a rotational speed of the power shaft obtained by conversion of the speed of the vehicle.

The phenomenon that the rate of change in the rotational speed of the power input shaft and the rate of change in the speed of the vehicle synchronize with each other corresponds to a phenomenon that a difference between the rate of change in the rotational speed of the power input shaft and the rate of change in the speed of the vehicle substantially becomes constant. For example, this corresponds to a situation in which a difference between these values is smaller than a predetermined reference value defined assuming constant speed running. The phenomenon that the difference between the rate of change in the rotational speed of the power input shaft and the rate of change in the speed of the vehicle substantially becomes constant means that the difference between these values is smaller than the predetermined reference value. In this case, the predetermined reference value indicates whether the difference is within a predetermined variation range defined assuming constant speed running, for example.

The rotational speed of the power input shaft and the rotational speed of the power shaft of the drive source are substantially proportional to each other, unless the clutch is disconnected, for example. Thus, synchronization between the rotational speed of the power input shaft and the speed of the vehicle can be paraphrased as synchronization between the rotational speed of the power shaft of the drive source and the speed of the vehicle. Also, synchronization between the rate of change in the rotational speed of the power input shaft and the rate of change in the speed of the vehicle can be rephrased as synchronization between the rate of change in the rotational speed of the power shaft of the drive source and the rate of change in the speed of the vehicle.

At least one parameter used as the torque-related amount is preferably a parameter used to determine or change an output torque from the drive source. The parameter used to determine or change the output torque from the drive source can be detected before the output torque from the drive source is determined or changed, and therefore are not affected by the delay of the response of the drive source. Use of the parameter related to determination or change of the output torque from the drive source can elongate a period in which the control can be performed, thereby making it possible to perform the control more precisely. At least one parameter used as the torque-related amount is preferably a parameter inputted to the drive source by the rider. Such a parameter can be detected at a much earlier time. This can further elongate a period in which the control can be performed, thereby making it possible to perform more precise control.

The driven member is the driving wheel of the vehicle, for example. The driven member is not particularly limitative. For example, the driven member may be a screw.

The vehicle is a transportation device. The vehicle is a manned vehicle or an unmanned transportation device. The vehicle is a vehicle including a driving wheel, for example. The vehicle is a straddled vehicle, for example. The straddled vehicle refers to a vehicle including a saddle where a driver can sit astride. The vehicle is a motorcycle, for example. There is no particular limitation on the motorcycle. Examples of the motorcycle encompass a scooter motorcycle, a moped motorcycle, an offroad motorcycle, and an onroad motorcycle. The straddled vehicle is not limited to the motorcycle. Alternatively, for example, the straddled vehicle may be an all-terrain vehicle (ATV). The vehicle is not limited to the straddled vehicle. Alternatively, for example, the vehicle may be a four-wheel vehicle with a cabin. The vehicle of the present invention is not limited to a vehicle with a wheel. Alternatively, for example, the vehicle of the present invention may be a ship with a screw. The vehicle including the transmission members provided to have backlash therebetween is preferably configured to be capable of leaning into turns. The vehicle configured to be capable of leaning into turns makes a turn while leaning toward the inside of the curve in order to counter against a centrifugal force applied to the vehicle during the turn. In response to driver's manipulation (e.g., shifting his/her weight), the vehicle leans toward the inside of the curve. Since the vehicle's posture is controlled by the driver, the vehicle is preferably configured to be capable of suppressing a shock and to have a high acceleration or deceleration response. In addition, instruments, devices, and the like to be mounted on the vehicle are preferably small and light in weight. From such a viewpoint, the stepped transmission device preferably has a high degree of freedom in design. For example, assume that a structure that may potentially impair the mechanical strength such as those described above is employed. In order for the configuration with such a structure to achieve an adequate mechanical strength, upsizing and/or reinforcements is required. This is one example where the freedom in design is limited by the structure of the stepped transmission device. The limitation on the freedom in design may potentially affect the design to achieve a reduction in size and/or weight. On the other hand, the present invention can enhance the freedom in design, and therefore is suitably applicable to the vehicle configured to be capable of leaning into turns. As will be described later, particularly for the vehicle including the transmission members provided to have backlash therebetween, it is possible to further improve the acceleration or deceleration response, while suppressing a shock that may otherwise be generated by the backlash between the transmission members when the state of the drive source is changed. In the vehicle configured to be capable of leaning into turns, the driver can easily feel the vehicle's behavior, since the driver controls the vehicle's posture. In consideration of this, it is preferable that the vehicle configured to be capable of leaning into turns can suppress a shock and have a high acceleration or deceleration response. Also from such a viewpoint, the present invention is suitable for the vehicle configured to be capable of leaning into turns. Examples of the vehicle configured to be capable of leaning into turns encompass straddled vehicles configured to be capable of leaning into turns (e.g., a motorcycle and a three-wheel motorcycle).

The control device may include a processor for executing a program, and may be an electronic circuit.

### Advantageous Effects of Invention

The present invention provides a vehicle including transmission members provided to have backlash therebetween, wherein the vehicle can suppress a shock that may otherwise be generated by the backlash between the transmission members when a state of a drive source is changed, and has a further improved acceleration or deceleration response.

### Brief Description of Drawings

[FIG. 1] A view illustrating a schematic configuration of a vehicle according to a first embodiment of the present invention.
[FIG. 2] A side view of the vehicle illustrated in FIG. 1.
[FIG. 3] (A) A view illustrating a driven gear and a dog ring in a non-transmission state. (B) A view illustrating the driven gear and the dog ring in an acceleration transmission state. (C) A view showing a partial cross-section viewed in a circumferential direction of the driven gear and the dog ring in the acceleration transmission state.
[FIG. 4] A time chart illustrating changes in output torque from a drive source, gear relative rotation angle, and rotational speeds observed when a deceleration state is switched to the acceleration state.
[FIG. 5] A view illustrating a configuration of a control device illustrated in FIG. 1.
[FIG. 6] A flowchart for explaining how the control device operates.
[FIG. 7] A time chart illustrating changes in rotational speeds, torque instruction value for the drive source, output torque from the drive source, and drive torque of a driving wheel observed when the state of the vehicle is switched from the deceleration state to the acceleration state.
[FIG. 8] A time chart for explaining a dog engagement estimated time obtained by a process for obtaining the dog engagement estimated time illustrated in FIG. 6.
[FIG. 9] A time chart illustrating an example of measurement of a behavior of the vehicle of the present embodiment when the deceleration state is switched to the acceleration state.
[FIG. 10] A time chart illustrating changes in rotational speeds, torque instruction value for the drive source, output torque from the drive source, and drive torque of the driving wheel observed when the acceleration state is switched to the deceleration state.
[FIG. 11] A time chart, related to a reference example, for illustrating transition of a state.
[FIG. 12] A time chart, related to the vehicle of the present embodiment, for illustrating changes in rotational speeds, output torque from the drive source, and drive torque of the driving wheel for different output torques from a drive source 11, observed when the deceleration state is switched to the acceleration state.
[FIG. 13] A time chart illustrating changes in rotational speeds, output torque from the drive source, and drive torque of the driving wheel observed at different gear stages.
[FIG. 14] A time chart illustrating an example of measurement of a behavior of a vehicle 1 of the present embodiment when the deceleration transmission state is switched to the acceleration state.
[FIG. 15] A time chart, related to a vehicle according to a second embodiment, for explaining how dog engagement is estimated.
[FIG. 16] A view illustrating a schematic structure of a vehicle according to a third embodiment of the present invention.

### Description of Embodiments

With reference to the drawings, embodiments of the present invention will be described.

### [First Embodiment]

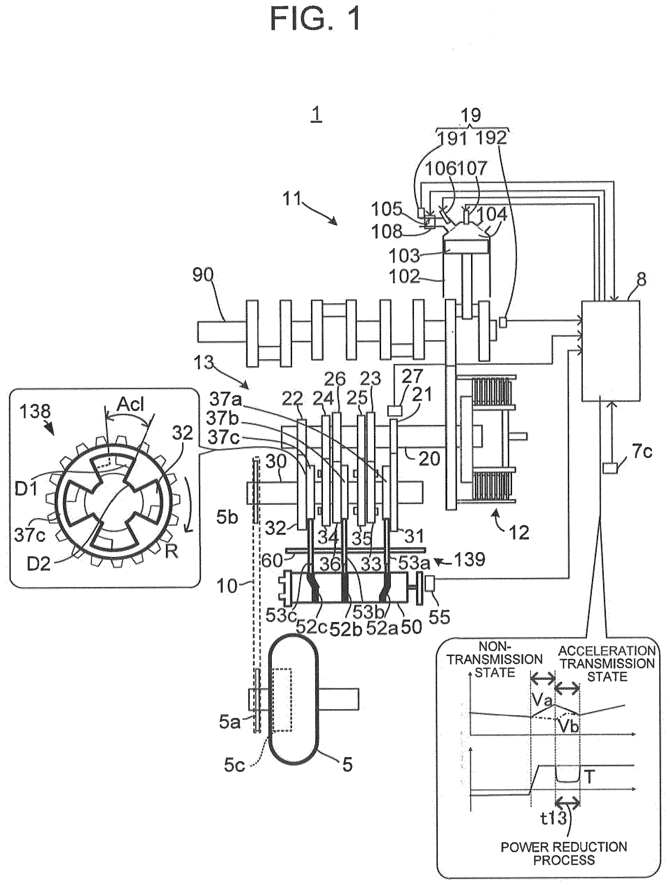

FIG. 1 is a view illustrating a schematic configuration of a vehicle according to a first embodiment of the present invention.

With reference to FIG. 1, an overview of a vehicle 1 according to the present embodiment will be described.

The vehicle 1 illustrated in FIG. 1 includes a drive source 11, a driving wheel 5, and a control device 8.

The drive source 11 outputs power. The drive source 11 of the present embodiment is an engine. Illustrated as the drive source 11 in FIG. 1 is a four-cylinder engine. The engine serving as the drive source 11 is a four-stroke engine. FIG. 1 schematically shows a structure of one of the cylinders, but does not show structures of the other cylinders. The drive source 11 includes a power shaft 90, a cylinder 102, a piston 103, and an spark plug 107. The power shaft 90 is a crankshaft.

The piston 103 is disposed in the cylinder 102 such that the piston 103 can move in a reciprocating manner. The spark plug 107 is disposed in a combustion chamber 104 provided in the cylinder 102. An intake path communicating with the combustion chamber 104 includes a throttle valve 105 and a fuel injection device 106. The control device 8 controls operation of the throttle valve 105, the fuel injection device 106, and the spark plug 107.

The throttle valve 105 adjusts an amount of the air to be supplied to the combustion chamber 104. The fuel injection device 106 supplies a fuel into the combustion chamber 104. An air-fuel mixture made of the air and the fuel supplied to the combustion chamber 104 is combusted by ignition caused by the spark plug 107. This causes reciprocating movement of the piston 103. The reciprocating movement of the piston 103 is converted into the rotation of the power shaft 90. Consequently, a torque of the power shaft 90 is outputted from the drive source 11.

The vehicle 1 further includes a clutch 12, a stepped transmission device 13, a torque detector 19, and a gear stage detector 55. The clutch 12 is interposed between the drive source 11 and the stepped transmission device 13 in a torque transmission path. The clutch 12 connects and disconnects power between the drive source and the stepped transmission device 13. According to driver's manipulation, the clutch 12 connects or disconnects the power.

The stepped transmission device 13 is connected to the clutch 12. The stepped transmission device 13 has a plurality of gear stages. The stepped transmission device 13 includes an input shaft 20, an output shaft 30, driving gears (21 to 26), driven gears (31 to 36), and a gear-stage setting mechanism 139.

The input shaft 20 is provided rotatably and is configured to receive power inputted thereto. The input shaft 20 receives power having been outputted from the drive source 11 and having passed through the clutch 12. The stepped transmission device 13 changes the rotational speed of the output shaft 30 relative to the input shaft 20 in steps.

The output shaft 30 is rotatably disposed along an axis that is in parallel with the input shaft 20. The plurality of driving gears (21 to 26) is provided to the input shaft 20, and is configured to rotate always in conjunction with the input shaft 20. The driving gears (21 to 26) are associated with their corresponding gear stages. The plurality of driven gears (31 to 36) is provided to the output shaft 30, and is rotatable relative to the output shaft 30. The driven gears (31 to 36) are engageable with their corresponding driving gears (21 to 26). At least one of the driven gears (31 to 36) is constantly engaged with a corresponding one of the driving gears (21 to 26).

Specifically, the plurality of driving gears (21 to 26) included in the stepped transmission device 13 illustrated in FIG. 1 is configured to rotate always in conjunction with the input shaft 20. Meanwhile, the plurality of driven gears (31 to 36) is rotatable relative to the output shaft 30. In addition, the driven gears (31 to 36) are engageable with their corresponding driving gears (21 to 26).

The gear-stage setting mechanism 139 is configured to mechanically select, from among patterns of power transmission from the input shaft 20 to the output shaft 30 via the driving gears (21 to 26) and the driven gears (31 to 36), an effective pattern of power transmission via a driving gear and a driven gear each associated with one of the gear stages.

The gear-stage setting mechanism 139 includes a mechanism 138 for dog engagement with backlash. The mechanism 138 for dog engagement with backlash includes first dog elements D1 and second dog elements D2. Namely, the vehicle 1 includes the first dog elements D1 and the second dog elements D2. The mechanism 138 for dog engagement with backlash mechanically selects, as being effective, power transmitted toward the driving gears (21 to 26) via the input shaft 20 or power transmitted from the driven gears (31 to 36) toward the output shaft 30.

Specifically, the first dog elements D1 of the stepped transmission device 13 illustrated in FIG. 1 are provided to the driven gears (31 to 36). The first dog elements D1 are protrusions arranged on the driven gears (31 to 36) at spaces in a circumferential direction. Specifically, the first dog elements D1 protrude from the driven gears (31 to 36) in an axial direction of the output shaft 30. The mechanism 138 for dog engagement with backlash includes a plurality of dog rings (37a to 37c). The second dog elements D2 are provided on the dog rings (37a to 37c). The second dog elements D2 are protrusions arranged on the annular dog rings (37a to 37c) at spaces in the circumferential direction.

The dog rings (37a to 37c) are provided on the output shaft 30 such that the dog rings (37a to 37c) are movable along the axis of the output shaft 30. The dog rings (37a to 37c) are configured to rotate always in conjunction with the output shaft 30. When one of the dog rings (37a to 37c) moves along the axis of the output shaft 30, the one of the dog rings is engaged with a corresponding one of the driven gears (31 to 36). Specifically, first dog elements D1 on the one of the driven gears get into spaces between second dog elements D2 on the corresponding one of the dog rings, and the second dog elements D2 and the first dog elements D1 come in contact with each other in the circumferential direction. This leads to establishment of dog engagement, which allows power transmission therebetween. The circumferential direction refers to a direction including a rotational direction R of the driven gears (31 to 36) and the dog rings (37a to 37c). Upon establishment of the dog engagement, power transmission in the rotational direction R is allowed.

The first dog elements D1 are one example of the first transmission member. The second dog elements D2 are one example of the second transmission member. The input shaft 20 is one example of, from among the power input shaft and the power output shaft related to the first dog elements D1 and the second dog elements D2, the power input shaft. The output shaft 30 is one example of the power output shaft.

The gear-stage setting mechanism 139 selects an effective path in which power is transmitted. Specifically, the gear-stage setting mechanism 139 causes one(s) of the driven gears (31 to 36) to be engaged with a corresponding one(s) of the dog rings (37a to 37c) by moving the corresponding one(s) of the dog rings (37a to 37c). The mechanism 138 for dog engagement with backlash makes a power transmission path effective by establishing dog engagement between the first dog elements D1 on the one(s) of the driven gears (31 to 36) selected by the gear-stage setting mechanism 139 and the second dog elements D2 on the corresponding one(s) of the dog rings (37a to 37c) such that the first dog elements D1 and the second dog elements D2 are in contact with each other in the circumferential direction. In this manner, the mechanism 138 for dog engagement with backlash mechanically selects, as being effective, power transmitted from the driven gears (31 to 36) toward the output shaft 30.

Being driven by the drive source 11, the driving wheel 5 causes the vehicle 1 to run. The driving wheel 5 is one example of the driven member. After power is transmitted from the input shaft 20 to the output shaft 30 in the stepped transmission device 13, the power is transmitted to the driving wheel 5 through a drive sprocket 9, a drive chain 10, a rear wheel driving sprocket 5a, and a hub damper 5c. This drives the driving wheel 5, thereby causing the vehicle 1 to run. The drive sprocket 9, the drive chain 10, the rear wheel driving sprocket 5a, and the hub damper 5c constitute a power transmission path for transmitting the power. The hub damper 5c, which is provided in the power transmission path, is deformed upon reception of the power. The hub damper 5c temporarily holds a part of the power transmitted through the power transmission path in this manner.

In the vehicle 1, the power is transmitted from the drive source 11 to the driving wheel 5 through the power transmission path. The clutch 12, the stepped transmission device 13, the drive sprocket 9, the drive chain 10, the rear wheel driving sprocket 5a, and the hub damper 5c are included in the power transmission path.

The gear stage detector 55 detects a gear stage for which power transmission has been made effective by the gear-stage setting mechanism 139. The gear stage detector 55 supplies, to the control device 8, a signal indicating the gear stage.

The torque detector 19 detects a torque-related amount, which is related to an output torque from the drive source 11 and indicates the output torque. In the present embodiment, the torque detector 19 includes a throttle opening detector 191 and a power shaft speed detector 192. The torque-related amount is a combination of an opening angle of the throttle valve 105 detected by the throttle opening detector 191 and a rotational speed of the power shaft 90 detected by the power shaft speed detector 192. A way to obtain the torque-related amount may include torque calculation performed by the control device 8. In the present embodiment, the output torque from the drive source 11 is obtained as the torque-related amount.

In the vehicle 1, power generated by the drive source 11 is normally transmitted to the power shaft 90, the clutch 12, the input shaft 20 of the stepped transmission device 13, the driving gears (21 to 26), the driven gears (31 to 36), the driven gears (the first dog elements D1), the dog rings (the second dog elements D2), the output shaft 30, the drive chain 10, and the driving wheel 5 in this order. Hereinafter, the positions of the components may occasionally be explained with the phrases "upstream" or "downstream" viewed in this power transmission flow.

The control device 8 controls the drive source 11. Specifically, the control device 8 is an engine control unit (ECU). The control device 8 reduces or increases an output torque from the drive source 11 by controlling at least one of an opening angle of the throttle valve 105, an amount of fuel supplied by the fuel injection device 106, or an ignition time of the spark plug 107. For example, the control device 8 reduces the power from the drive source 11 by retarding the ignition time of the spark plug 107 in a combustion cycle of the drive source 11.

The control device 8 executes at least one of a power reduction process or a power increase process. Specifically, the control device 8 of the present embodiment executes both of the power reduction process and the power increase process. The control device 8 outputs a torque instruction value for controlling power to be outputted from the drive source 11.

The power reduction process is a process for reducing power (torque T) from the drive source 11 when the state of the mechanism 138 for dog engagement with backlash is switched from a non-transmission state to an acceleration transmission state. The non-transmission state refers to a state where the first dog elements D1 included in the mechanism 138 for dog engagement with backlash are away from the second dog elements D2 in the circumferential direction and power transmission is not allowed. The acceleration transmission state refers to a state where dog engagement between the first dog elements D1 and the second dog elements D2 is established as a result of contact between the first dog elements D1 and the second dog elements D2 in the circumferential direction and thus power transmission in an acceleration direction is allowed.

The power increase process is a process for increasing the power from the drive source 11 when the state of the mechanism 138 for dog engagement with backlash is switched from the non-transmission state to a deceleration transmission state where power transmission in a decelerating direction is allowed as a result of dog engagement.

The control device 8 controls a time to start at least one of the power reduction process or the power increase process or a time to end at least one of the power reduction process or the power increase process so that the time is equal to or prior to a time at which the non-transmission state is switched to the acceleration transmission state or the deceleration transmission state (t13). The control device 8 controls the time to start at least one of the power reduction process or the power increase process or the time to end at least one of the power reduction process or the power increase process based on a torque-related amount detected by the torque detector 19 (191, 192). In addition, the control device 8 controls the time to end at least one of the power reduction process or the power increase process such that the time is later than the time (t13) at which the non-transmission state is switched to the acceleration transmission state or the deceleration transmission state.

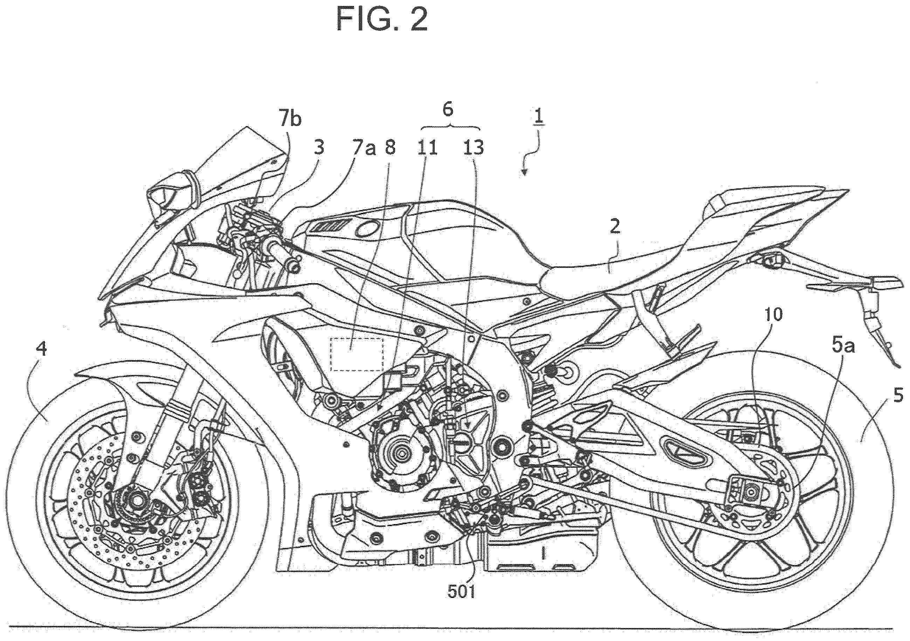

FIG. 2 is a side view of the vehicle 1 illustrated in FIG. 1.

The vehicle 1 illustrated in FIGs. 1 and 2 is a motorcycle. The vehicle 1 is configured to be capable of leaning into turns. The vehicle 1 includes an engine unit 6. The drive source 11 and the stepped transmission device 13 are included in the engine unit 6. Power of the drive source 11 is controlled by the control device 8. The vehicle 1 includes a seat 2, a handle 3, wheels 4 and 5, a clutch lever 7a, an accelerator operator 7b, and a shift pedal 501. The clutch lever 7a and the accelerator operator 7b are mounted to the handle 3 such that the driver can manipulate the clutch lever 7a and the accelerator operator 7b with his/her hand. The shift pedal 501 is mounted such that the driver can manipulate the shift pedal 501 with his/her foot. When the driver manipulates the shift pedal 501, the manipulation of the shift pedal 501 is inputted to the stepped transmission device 13. Of the wheels 4 and 5 in the figure, the rearside wheel 5 is the driving wheel 5. The vehicle 1 is not limited to such a vehicle. Alternatively, the vehicle 1 may be a vehicle including a front-side wheel that is a driving wheel.

Power outputted from the drive source 11 is transmitted to the stepped transmission device 13. The power having been transmitted to the stepped transmission device 13 is transmitted to the driving wheel 5 through the drive chain 10, the rear wheel driving sprocket 5a, and the hub damper 5c.

Referring back to FIG. 1, the following will describe further details of the stepped transmission device 13 of the present embodiment.

The input shaft 20 is configured to receive the power inputted thereto from the power shaft 90 of the drive source 11. While the clutch 12 is connected, the input shaft 20 receives the power from the power shaft 90.

The input shaft 20 is provided with the plurality of driving gears 21 to 26. The driving gears 21 to 26 are arranged in the following order from the right end of the input shaft 20 in FIG. 1: a first-gear-stage driving gear 21, a third-gear-stage driving gear 23, a fifth-gear-stage driving gear 25, a sixth-gear-stage driving gear 26, a fourth-gear-stage driving gear 24, and a second-gear-stage driving gear 22. Meanwhile, the output shaft 30 is provided with the plurality of driven gears 31 to 36. The driven gears 31 to 36 are arranged in the following order from the right end of the output shaft 30 in FIG. 1: a first-gear-stage driven gear 31, a third-gear-stage driven gear 33, a fifth-gear-stage driven gear 35, a sixth-gear-stage driven gear 36, a fourth-gear-stage driven gear 34, and a second-gear-stage driven gear 32. The driving gears 21 to 26 are paired with the driven gears 31 to 36 for their corresponding gear stages. The gears in each pair are engageable with each other at the same position in the axial directions of the input shaft 20 and the output shaft 30.

The gear-stage setting mechanism 139 selects, from among patterns of power transmission from the input shaft 20 to the output shaft 30 via the driving gears 21 to 26 and the driven gears 31 to 36, an effective pattern of power transmission via a driving gear and a driven gear in a pair associated with one of the gear stages. The gear-stage setting mechanism 139 includes a shift cam 50, shift forks 53a to 53c, a folk guide shaft 60, and the mechanism 138 for dog engagement with backlash. On the outer circumference of the shift cam 50, cam grooves 52a to 52c are formed. The cam grooves 52a to 52c partially receive the shift forks 53a to 53c, respectively, such that the shift forks 53a to 53c are guided along the cam grooves 52a to 52c in conjunction with rotation of the shift cam 50 and the shift forks 53a to 53c to move in the axial direction.

When the shift cam 50 rotates in response to a manipulation of the shift pedal 501 (see FIG. 2), the shift forks 53a to 53c move in the axial direction along the cam grooves 52a to 52c. This causes the dog rings 37a to 37c to move in the axial direction together with the shift forks 53a to 53c. Consequently, the dog rings 37a to 37c move such that one of the dog rings 37a to 37c is engaged with a corresponding one of the driven gears (31 to 36), so that a path for power transmission is selected. The second dog elements D2 on the one of the dog rings (37a to 37c) and the first dog elements D1 on the one of the driven gears (31 to 36) having been selected by the gear-stage setting mechanism 139 are in contact with each other in the circumferential direction to establish dog engagement therebetween.

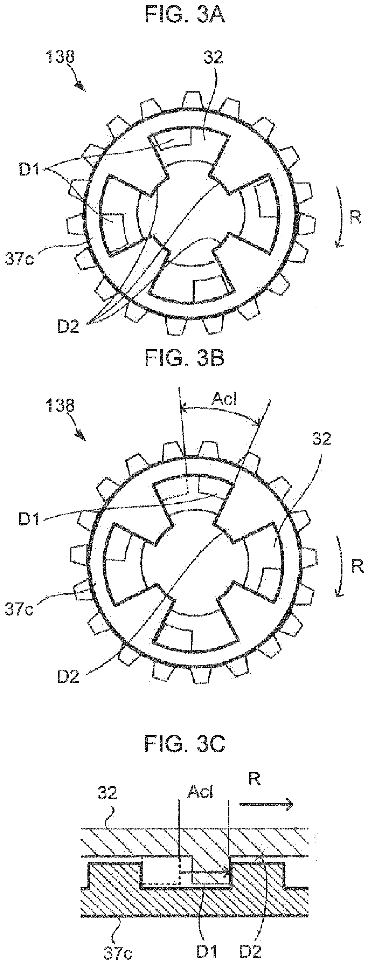

FIG. 3(A) is a view illustrating the driven gear 32 and the dog ring 37c in the non-transmission state. FIG. 3(B) is a view illustrating the driven gear 32 and the dog ring 37c in the acceleration transmission state. FIG. 3(C) is a view showing a partial cross-section viewed in the circumferential direction of the driven gear 32 and the dog ring 37c in the acceleration transmission state. FIGs. 3(A) to 3(C) each illustrate the mechanism 138 for dog engagement with backlash that includes the first dog elements D1 and the second dog elements D2.

In FIGs. 3(A) to 3(C), the driven gear 32 and the dog ring 37c associated with the second gear stage are illustrated as examples of the driven gears (31 to 36) and the dog rings (37a to 37c). It should be noted that the basic structures of the driven gear 32 and the dog ring 37c are identical to those for the other gear stages.

The first dog elements D1 are protrusions arranged on the driven gear 32 at spaces in the circumferential direction. The circumferential direction refers to a direction that is along the rotational direction R of the driven gear 32 and the dog ring 37c. The first dog elements D1 protrude from the driven gear 32 in the axial direction of the output shaft 30. The second dog elements D2 define recesses arranged on the dog ring 37c at spaces in the circumferential direction. The first dog elements D1 illustrated in the figure are located in spaces between the second dog elements D2 arranged in the circumferential direction. The spaces between the second dog elements D2 arranged in the circumferential direction are longer in length than the first dog elements D1 viewed in the circumferential direction. The first dog elements D1 are located in the spaces between the second dog elements D2 arranged in the circumferential direction while having backlash therebetween. The first dog elements D1 and the second dog elements D2 are provided such that the first dog elements D1 and the second dog elements D2 have backlash therebetween and the first dog elements D1 and the second dog elements D2 can rotate relative to each other.

Since the spaces between the second dog elements D2 are longer in length than the first dog elements D1 viewed in the circumferential direction, the first dog elements D1 can easily get into the spaces between the second dog elements D2 when the dog ring 37c moves toward the driven gear 32 in the axial direction. Meanwhile, the first dog elements D1 can easily get out of the spaces between the second dog elements D2 when the dog ring 37a moves away from the driven gear 32 in the axial direction. Thus, the first dog elements D1 and the second dog elements D2 can be smoothly engaged with each other or disengaged from each other for upshifting or downshifting.

The rotational direction R illustrated in FIGs. 3(A) to 3(C) indicates a direction in which the driven gear 32 and the dog ring 37c rotate while the vehicle 1 is running. Namely, the rotational direction R indicates a direction of a torque applied to the driven gear 32 during an acceleration state. The rotational direction R may also be referred to as an acceleration direction R.

During the acceleration transmission state illustrated in FIG. 3(B), dog engagement between the first dog elements D1 and the second dog elements D2 is established as a result of contact between the first dog elements D1 and the second dog elements D2 in the circumferential direction. This allows torque transmission from the first dog elements D1 to the second dog elements D2 in the acceleration direction R. The first dog elements D1 and the second dog elements D2 are configured to be engaged with each other to enable torque transmission therebetween.

Assume that, while the vehicle 1 is running, the deceleration transmission state where the drive source 11 is driven by the power from the driving wheel 5 is switched to the acceleration state where the drive source 11 outputs an acceleration torque, for example. In this case, the driven gear 32 at the position in the non-transmission state in FIG. 3(A) rotates in the acceleration direction R relative to the dog ring 37c. The driven gear 32 rotates relative to the dog ring 37c by a backlash angle Acl, so as to be in the position illustrated in FIG. 3(B). When the driven gear 32 is in the position illustrated in FIG. 3(B), dog engagement between the first dog elements D1 and the second dog elements D2 is established as a result of contact between the first dog elements D1 and the second dog elements D2 in the circumferential direction.

As a result of the series of actions described above, the non-transmission state (FIG. 3(A)) where the first dog elements D1 are away from the second dog elements D2 in the circumferential direction and power transmission is not allowed is switched, through dog engagement in which the second dog elements D2 are in contact with the first dog elements D1 in the circumferential direction, to the acceleration transmission state where power transmission in the acceleration direction R is allowed. Consequently, the acceleration power is transmitted from the input shaft 20 (see FIG. 1) to the output shaft 30 in the stepped transmission device 13.

During a period between the non-transmission state illustrated in FIG. 3(A) and the acceleration transmission state illustrated in FIG. 3(B), the rotational speed of the driven gear 32 increases due to the acceleration power from the drive source 11. During this period, the driven gear 32 is not engaged with the dog ring 37c, which is an object to be driven, and therefore the driven gear 32 is free from a rotational resistance given by the dog ring 37c. Therefore, the amount of increase in the rotational speed of the driven gear 32 is large.

When the driven gear 32 rotating at the increased rotational speed is engaged with the dog ring 37c, the output torque from the drive source 11 as well as an angular momentum caused by the rotation of the driven gear 32 are transmitted to the dog ring 37c. Namely, the output torque from the drive source 11 as well as a force caused by an inertia of the driven gear 32 are transmitted from the first dog elements D1 to the second dog elements D2. The angular momentum transmitted from the driven gear 32 also includes angular momenta caused by rotation of members disposed upstream of the driven gear 32 in the power transmission path. The angular momenta caused by the rotation of the members disposed upstream of the driven gear 32 in the power transmission path includes angular momenta caused by rotation of the driving gear 22, the input shaft 20, the clutch 12, the power shaft 90, and the like. Thus, when the state of the first dog elements D1 and the second dog elements D2 is switched from the non-transmission state (FIG. 3 (A)) to the acceleration transmission state (FIG. 3(B)), a greater angular momentum than an angular momentum generated by rotation of the driven gear 32 alone is transmitted in a short period. Namely, a large angular momentum is transmitted from the driven gear 32 to the dog ring 37c in a short period.

The angular momentum having been transmitted to the dog ring 37c in a short period is transmitted from the output shaft 30 of the stepped transmission device 13 to the driving wheel 5 (see FIG. 2). Consequently, a shock occurs in power of the driving wheel 5.

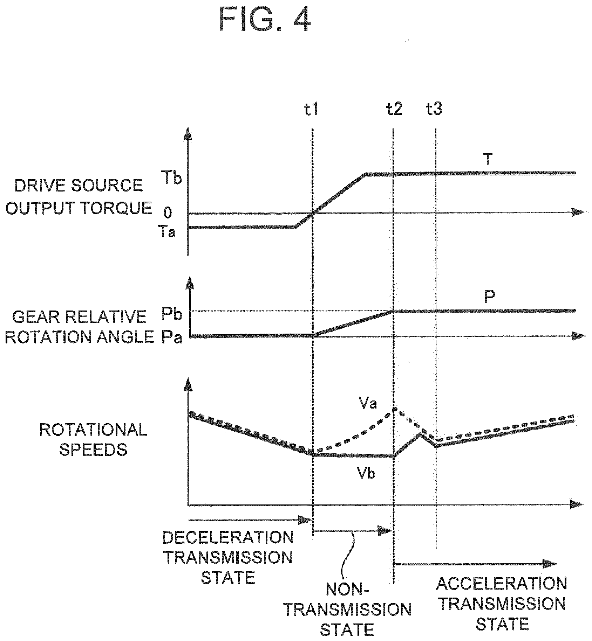

FIG. 4 is a time chart illustrating changes in output torque from the drive source 11, gear relative rotation angle, rotational speeds, and the like observed when the deceleration transmission state is switched to the acceleration transmission state. FIG. 4 illustrates, as a reference example, changes observed when the power reduction process is not executed.

FIG. 4 shows the output torque T from the drive source, the gear relative rotation angle P, the rotational speed Va of the drive source 11, and the rotational speed Vb of the driving wheel observed when the state of the drive source 11 of the vehicle 1 is switched from the deceleration transmission state to the acceleration state. The gear relative rotation angle P indicates a relative rotation angle of the driven gear 32 with respect to the dog ring 37c illustrated in FIGs. 3(A) and 3(B). The output torque T from the drive source can be obtained by directly measuring a torque outputted from the drive source 11. Alternatively, the output torque T from the drive source can be obtained based on an opening angle of the throttle valve 105 detected by the throttle opening detector 191 and a rotational speed of the power shaft 90 detected by the power shaft speed detector 192. The rotational speed Va of the power shaft indicates a rotational speed of the power shaft 90. Variations in the rotational speed Va of the power shaft indicate variations in rotational speed of the input shaft 20. The rotational speed Vb of the driving wheel indicates a speed of the vehicle 1. For ease of comparison, indicated as the rotational speed Vb of the driving wheel is a value corresponding to the rotational speed of the power shaft 90 which value is obtained by conversion performed based on a ratio between the rotational speed of the power shaft 90 and the rotational speed of the driving wheel 5 in the vehicle 1.

The deceleration transmission state of the drive source 11 continues until time t1. In the deceleration transmission state, the drive source 11 outputs a negative torque Ta. Namely, the drive source 11 outputs negative power. The negative torque Ta is a deceleration torque acting against the rotation of the power shaft 90. For example, the negative torque Ta is generated when a torque generated by a combustion operation of the engine serving as the drive source 11 is smaller than a rotational resistance force acting on the drive source 11, the rotational resistance force being generated by the drive source 11 itself and the configuration downstream of the drive source 11. The negative torque and the negative power each indicate a situation that the drive source 11 is being driven as a load. Namely, the drive source 11 that is outputting the negative torque Ta is being driven by power from the driving wheel 5. The deceleration transmission state refers to a state where so-called engine braking is operating. In the deceleration transmission state, the drive source 11 applies, to the driven gear 32 illustrated in FIG. 3, a torque acting in a reverse direction to the rotational direction R.

For example, if the opening angle of the throttle valve 105 (see FIG. 1) increases, the state of the drive source 11 is switched from the deceleration transmission state to the acceleration state. At time t1, the output torque T from the drive source is changed from the negative torque Ta to a positive torque Tb. As a result of the phenomenon that the output torque T from the drive source is changed from the negative torque Ta to the positive torque Tb, a torque in the rotational direction R is applied to the driven gear 32 illustrated in FIG. 3.

After the output torque T from the drive source is turned into positive, the first dog elements D 1 are away from the second dog elements D2 in the circumferential direction, and consequently a transition to the non-transmission state where power transmission is not allowed takes place, as illustrated in FIG. 3(A). The non-transmission state continues until the relative rotation angle of the driven gear 32 becomes equal to an angle Pb. A difference between the angle Pa and the angle Pb is equal to the backlash angle Acl illustrated in FIG. 3(B). In the non-transmission state, the driven gear 32 rotates by the backlash angle Acl.

In the non-transmission state, the rotational speed Va of the power shaft 90 increases due to the power from the drive source 11. During this period, the drive torque outputted from the output shaft 30 of the stepped transmission device 13 to the driving wheel 5 is zero. Namely, during a period from time t1 to time t3, the driving wheel 5 is not driven by the drive source 11. Thus, the power shaft 90 is accelerated at a high rate. A rate of increase of the rotational speed Va of the power shaft 90 during this period is higher than that during a period after time t5, for example.

Meanwhile, the power from the drive source 11 is not transmitted to the driving wheel 5. The rotational speed Vb of the driving wheel decreases by an amount corresponding to a resistance subjected to the driving wheel 5.

At time t2, the first dog elements D 1 come in contact with the second dog elements D2 in the circumferential direction to establish dog engagement, as illustrated in FIG. 3(B). Consequently, the non-transmission state is switched to the acceleration transmission state. When the non-transmission state is switched to the acceleration transmission state, the angular momentum of the driven gear 32 rotating at the rotational speed Va having been increased during the non-transmission state is transmitted to the driving wheel 5 via the dog ring 37c. The angular momentum caused by the rotation of the driven gear 32, more specifically, the angular momentum of the driven gear 32 including the angular momenta caused by the rotation of the members disposed upstream of the driving gear 32 in the power transmission path as well as the output torque from the drive source 11 are discharged via the driving wheel 5. Consequently, the rotational speed Va of the power shaft decreases, and the rotational speed Vb of the driving wheel increases. After time t2 at which the non-transmission state is switched to the acceleration transmission state, the rotational speed Vb of the driving wheel increases rapidly.

At time t3 that is later than time t2 at which dog engagement is established, a rate of change in the rotational speed Va of the power shaft and a rate of change in the rotational speed Vb of the driving wheel become substantially equal to each other. At time t3, the rate of change in the rotational speed Va of the power shaft and the rate of change in the rotational speed Vb of the driving wheel synchronize with each other. Note that, in the period prior to time t3, a difference between the rate of change in the rotational speed Va of the power shaft and the rate of change in the rotational speed Vb of the driving wheel is absorbed by a damper element and/or the like (not illustrated) included in a power transmission path extending from the drive source 11 to the driving wheel 5. The angular momentum discharged during a period from time t2 to time t3 becomes a shock in the power of the vehicle 1. This shock occurs at or after time t2, which is later than time t1 and at which the state of the drive source 11 is switched from the deceleration transmission state to the acceleration state. Thus, the time when a shock to the vehicle is generated is further delayed relative to the time driver's manipulation for acceleration.

The rotational speed Vb of the driving wheel illustrated in FIG. 4 is a conversion value obtained by multiplying the speed of the vehicle 1 by a ratio in the entire transmission path defined assuming constant speed running. In the example illustrated in FIG. 4, at time t3, a difference between the rotational speed Va of the power shaft and the conversion value of the rotational speed Vb of the driving wheel becomes substantially constant. Namely, at time t3, the rotational speed Va of the power shaft synchronizes with the rotational speed Vb of the driving wheel.

The foregoing has described the shock occurring when the state of the drive source 11 is switched from the deceleration transmission state to the acceleration state. Such a shock occurs also when the acceleration state is switched to the deceleration transmission state without the power increase process. In such a case, however, a torque is applied in a reverse direction and the rotational speeds are changed in a reverse manner to those of the above description. Namely, a torque is applied to the first dog elements D1 in a deceleration direction, which is opposite to the rotational direction R illustrated in FIG. 3(B). In addition, when the non-transmission state is switched to the deceleration transmission state as a result of dog engagement between the first dog elements D 1 and the second dog elements D2, the power shaft rotational speed decreases. Also in this case, a shock to the vehicle 1 occurs.

According to the vehicle 1 of the present embodiment, the control device 8 controls power outputted from the drive source 11 so as to suppress the shock that may otherwise be generated in the above-described manner. Thus, with the vehicle 1 of the present embodiment, it is possible to suppress the shock without reducing the backlash angle Acl of the dog ring illustrated in FIG. 3 or modifying the shapes of the dog elements into special ones.

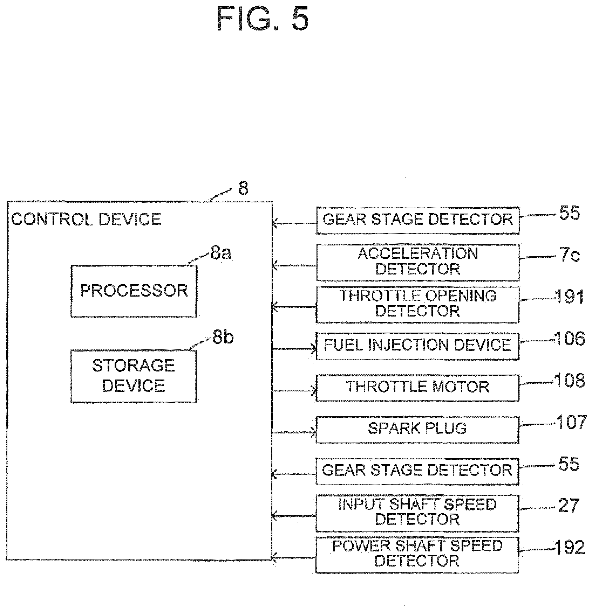

FIG. 5 is a view illustrating a configuration of the control device 8 illustrated in FIG. 1.

The control device 8 includes a processor 8a for executing a program and a storage device 8b for storing the program and data. The control device 8 controls the drive source 11 by causing the processor 8a to execute the program stored in the storage device 8b.

The control device 8 is connected with the gear stage detector 55, an acceleration detector 7c, the throttle opening detector 191, the fuel injection device 106, a throttle motor 108, and the spark plug 107. The acceleration detector 7c detects an amount of manipulation of the accelerator operator 7b (see FIG. 2). The spark plug 107 is connected to the control device 8 via an ignition device (not illustrated). The control device 8 is also connected with the power shaft speed detector 192 and an input shaft speed detector 27. The input shaft speed detector 27 detects information related to the rotational speed of the input shaft 20. The input shaft speed detector 27 is one example of the rotational speed detector.

The control device 8 controls the throttle motor 108, the fuel injection device 106, and the spark plug 107, so as to control power that is to be outputted from the drive source 11.

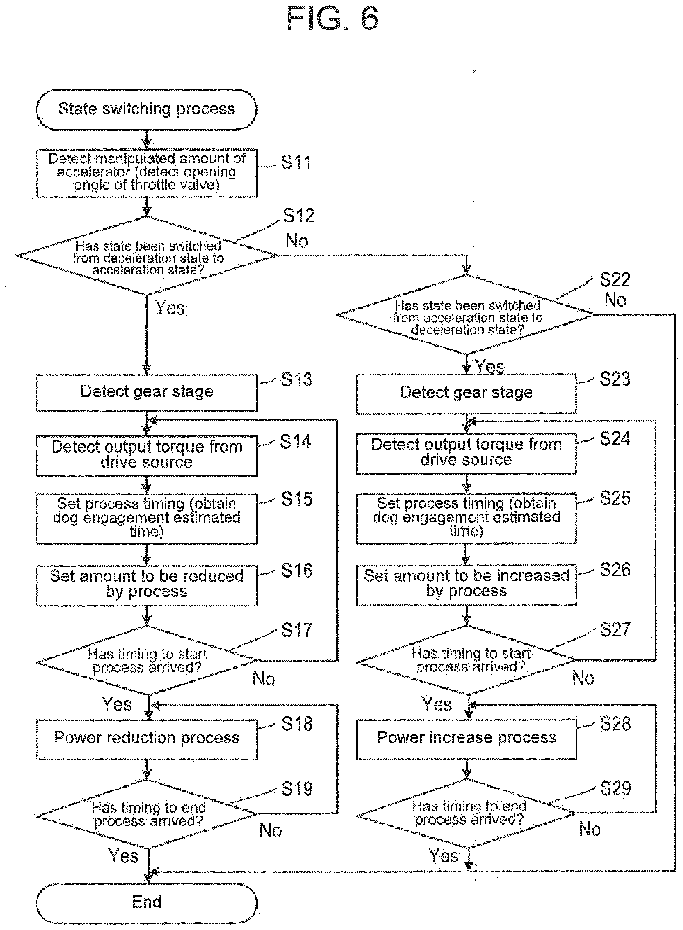

FIG. 6 is a flowchart for explaining how the control device operates.

FIG. 6 illustrates, from among processes to be executed by the control device, a process executed when the state of the stepped transmission device 13 is switched from the non-transmission state to the acceleration transmission state and a process executed when the state of the stepped transmission device 13 is switched from the non-transmission state to the deceleration transmission state. Each of the processes illustrated in FIG. 6 is executed in conjunction with another process for controlling the drive source 11. Examples of such a process encompass a process of controlling an opening angle of the throttle valve 105 based on a detection result from the acceleration detector 7c.

The control device 8 detects an amount of manipulation of the accelerator (S11). The control device 8 obtains the accelerator manipulated amount detected by the acceleration detector 7c.

In step S11, instead of the accelerator manipulated amount, the control device 8 may detect an opening angle of the throttle valve 105. In this case, the throttle opening detector 191 detects the opening angle of the throttle valve 105. Further alternatively, instead of the accelerator manipulated amount, the control device 8 may detect an output torque from the drive source 11. The power shaft speed detector 192 in the torque detector 19 detects a rotational speed of the power shaft 90. The output torque is represented by a combination of the opening angle of the throttle valve 105 and the rotational speed of the power shaft 90. The opening angle of the throttle valve 105 and the rotational speed of the power shaft 90 are mutually related to the output torque. The control device 8 obtains the output torque based on the opening angle of the throttle valve 105 and the rotational speed of the power shaft 90. The control device 8 performs a calculation based on a formula including, as variables, the opening angle of the throttle valve 105 and the rotational speed of the power shaft 90. In this manner, the control device 8 detects the output torque from the drive source 11. Alternatively, the method for detecting the output torque may be performed by, e.g., referring to a map preliminarily created based on the opening angle of the throttle valve 105 and the rotational speed of the power shaft 90.

The control device 8 determines whether or not the deceleration transmission state has been switched to the acceleration state (S12). Based on the change in the accelerator manipulated amount obtained in step S11, the control device 8 determines whether or not the deceleration transmission state has been switched to the acceleration state. Instead of the accelerator manipulated amount, the control device 8 may use the opening angle of the throttle valve 105 or the torque from the drive source 11 to determine whether or not the deceleration transmission state has been switched to the acceleration state.

For example, the control device 8 stores the past state about the accelerator manipulated amount obtained in the past, and compares the state obtained in the past with the current state, so as to determine whether or not the deceleration transmission state has been switched to the acceleration state.

If the deceleration transmission state has been switched to the acceleration state (Yes in S12), the control device 8 detects a gear stage selected by the stepped transmission device 13 (S13). Specifically, the control device 8 obtains information indicating the gear stage detected by the gear stage detector 55.

Subsequently, the control device 8 detects an output torque from the drive source 11 (S14). The control device 8 detects the output torque from the drive source 11 based on a detection result from the torque detector 19.

Then, the control device 8 sets a process time (S15). In step S15, the control device 8 obtains a time of dog engagement. The control device 8 obtains a dog engagement estimated time. The dog engagement estimated time indicates a time period remained until establishment of dog engagement between the first dog elements D1 and the second dog elements D2. As will be described later, a process start time does not coincide with the time of dog engagement. However, the process start time is determined based on the dog engagement estimated time.

In step S15, the control device 8 also obtains the dog engagement estimated speed. The dog engagement estimated speed refers to a relative speed difference between the first dog elements D1 and the second dog elements D2 observed at the time at which dog engagement between the first dog elements D1 and the second dog elements D2 is established. Alternatively, for example, the dog engagement estimated speed may be represented by a relative speed difference between the input shaft 20 and the output shaft 30. The control device 8 uses the detected output torque to calculate the dog engagement estimated speed. Alternatively, for example, the control device 8 can calculate the dog engagement estimated speed at the time of the dog engagement based on the speeds of the input shaft 20 and the output shaft 30 in the non-transmission state.

In step S15, the control device 8 also obtains a rotational synchronization estimated time. The rotational synchronization estimated time refers to a time period from the establishment of dog engagement between the first dog elements D1 and the second dog elements D2 to the synchronization between the rotation of the power shaft 90 and the rotation of the driving wheel. The rotational synchronization estimated time is represented by a time period until the rate of change in the rotational speed of the power shaft 90 coincides with the rate of change in the rotational speed of the driving wheel. The control device 8 uses the dog engagement estimated speed to calculate the rotational synchronization estimated time.

The control device 8 calculates the dog engagement estimated time based on the output torque from the drive source 11. For example, the dog engagement estimated time refers to a time period between the time at which the deceleration transmission state is switched to the acceleration state (the time of "Yes" in S12) and the time of dog engagement. The control device 8 calculates the dog engagement estimated time based on the output torque from the drive source 11 having been detected by the torque detector 19. The dog engagement estimated time changes according to the output torque from the drive source 11. The greater the output torque, the shorter the dog engagement estimated time. '

In the state that is not the non-transmission state where the first dog elements D1 and the second dog elements D2 are away from each other, the control device 8 obtains an estimated time period until the first dog elements D1 and the second dog elements D2 separate from each other and then dog engagement the first dog elements D1 and the second dog elements D2 is established.

At the time at which the output torque increases from a negative value to zero, the first dog elements D1 separate from the second dog elements D2. By estimating a time period taken for the output torque to increase from the negative value to zero, the control device 8 obtains a time period taken for the first dog elements D1 to separate from the second dog elements D2. In addition, the control device 8 estimates a time period taken for first dog elements D1 to establish dog engagement with second dog elements D2 on a second side opposite to a first side after the first dog elements D1 are separated from second dog elements D2 on the first side. The control device 8 estimates the time period until the establishment of the dog engagement based on the time period taken for the first dog elements D1 to separate from the second dog elements D2 as well as the time period taken for the first dog elements D1 to establish dog engagement with the second dog elements D2 on the second side opposite to the first side after the first dog elements D1 are separated from the second dog elements D2 on the first side.

The control device 8 obtains the dog engagement estimated time based on the torque for driving the first dog elements D1 and a design value corresponding to the backlash.

The detection of the output torque from the drive source 11 (S14) and the obtaining of the dog engagement estimated time (S15) will be repeated until a time to start the power reduction process (described later) arrives (No in S17). Thus, every time the detection of the output torque is performed, the dog engagement estimated time is updated.

The obtaining of the dog engagement estimated time will be described in detail later.

In order to obtain the rotational synchronization estimated time in step S15, the control device 8 estimates the rotational synchronization estimated time based on the dog engagement estimated speed and the gear stage.

The rotational synchronization estimated time is used to determine a time to end the power reduction process.

The smaller the gear stage, the longer the rotational synchronization estimated time. Namely, the larger the gear ratio of the stepped transmission device 13, the longer the rotational synchronization estimated time. The rotational synchronization estimated time can be obtained based on parameters such as those indicating a dog engagement estimated speed and a gear stage obtained by, e.g., referring to a map generated by an experiment or a simulation. Alternatively, for example, the rotational synchronization estimated time can be calculated based on a dog engagement estimated speed and a gear stage obtained with a formula expressing a mechanism of absorption and discharge of a shock.

Subsequently, the control device 8 sets an amount (reduction amount) of torque from the drive source 11 to be reduced by the power reduction process (S18) (S16). The power reduction process refers to a process for reducing a transmission torque to be transmitted between the first dog elements D1 and the second dog elements D2. In the power reduction process, the control device 8 reduces the transmission torque by reducing an output torque from the drive source 11. The following will describe a case where the transmission torque is reduced by reducing the output torque.

The control device 8 sets the reduction amount of transmission torque based on the output torque from the drive source 11. After the non-transmission state is switched to the acceleration transmission state as a result of dog engagement between the first dog elements D1 and the second dog elements D2, the output torque from the drive source 11 and an angular momentum caused by the inertia of the drive source 11 are transmitted via the first dog elements D1 and the second dog elements D2. In the case where the angular momentum is transmitted, the magnitude of the transmission torque is affected mainly by a relative speed between the first dog elements D1 and the second dog elements D2 measured at the time of the dog engagement. The relative speed between the first dog elements D1 and the second dog elements D2 depends on the output torque from the drive source 11 in the non-transmission state. As described above, the reduction amount of transmission torque is set based on the output torque from the drive source 11. Thanks to this, the amount of transmission torque to be reduced by the power reduction process is likely to become precisely suitable for the period in which the torque is transmitted after the non-transmission state is switched to the acceleration transmission state.

More specifically, the control device 8 sets the reduction amount of transmission torque based on the output torque from the drive source 11 and the gear stage detected by the gear stage detector. Actually, the control device 8 sets, as the reduction amount of transmission torque, a reduction amount of output torque. As the output torque from the drive source 11 becomes greater in the acceleration state in which the power reduction process is not performed yet, the control device 8 sets a greater amount of output torque to be reduced by the power reduction process. In addition, as a lower gear stage is selected, the control device 8 sets a greater reduction amount of output torque. Namely, as the gear ratio becomes larger, the reduction amount of power is set greater.

The amount of torque to be reduced by the power reduction process is calculated, e.g., based on a model representing a time response characteristic of a path which extends from the power shaft 90 to the driving wheel and through which rotation is transmitted. Alternatively, however, the amount of torque to be reduced by the power reduction process may be obtained based on parameters such as those indicating a torque and a gear stage observed prior to the power reduction process, the torque and the gear stage being obtained by, e.g., reference to the map generated by the experiment or the simulation.

In addition, the control device 8 can set a torque correction pattern. The torque correction pattern includes a period to perform the power reduction process as well as an amount by which power from the drive source 11 is changed over time due to the power reduction process performed during the period. With this, the control device 8 can change the power from the drive source 11 over time during the power reduction process. Based on the dog engagement estimated speed, the control device 8 can change the torque correction pattern.

Subsequently, the control device 8 determines whether or not the time to start the power reduction process has arrived (S17).

If the dog engagement estimated time obtained at that time is shorter than response time of the drive source 11, the control device 8 determines that the time to start the power reduction process has arrived.

If it is determined that the time to start the power reduction process has arrived (Yes in S17), the control device 8 starts the power reduction process (S18).

The response time of the drive source 11 refers to a time period taken for the output torque from the drive source to start decreasing after the control device 8 outputs, to the drive source, an instruction value for torque reduction in response to the start of the power reduction process. For example, in a case where the torque is to be reduced by delaying the ignition time, the reduction of the torque will not be started until the arrival of the ignition time in the combustion cycle. In this case, the response time of the drive source 11 corresponds to a time period between the output of the instruction value by the control device 8 and the arrival of the ignition time. Thus, the time period between the output of the instruction value by the control device 8 and the arrival of the ignition time varies depending on the time of the output of the instruction value by the control device 8. Namely, the time period until the arrival of the ignition time varies depending on the elapsed time. The control device 8 of the present embodiment continuously calculates, as the response time, a time period until the arrival of the ignition time.

As described above, the control device 8 starts the power reduction process when the dog engagement estimated time is shorter than the response time of the drive source 11. Consequently, the output torque from the drive source 11 drops in accordance with the time of the dog engagement. Thanks to this process, the torque outputted from the drive source 11 decreases when the state of the mechanism 138 for dog engagement with backlash (see FIGs. 3(A) and 3(B)) is switched from the non-transmission state (see FIG. 3(A)) to the acceleration transmission state (see FIG. 3(B)).

The time to start the power reduction process is changed based on the output torque from the drive source 11 detected by the torque detector 19 as a torque correlation quantity. In step S16, the amount of torque to be reduced by the power reduction process is changed based on the output torque from the drive source 11 detected by the torque detector 19 as the torque correlation quantity and the gear stage detected by the gear stage detector 55.

Subsequently, the control device 8 determines whether or not a time to end the power reduction process has arrived (S19). The control device 8 continues the power reduction process (S18) until the time to end the power reduction process comes (No in S19).

In the power reduction process (S18), the control device 8 outputs, to the drive source, a torque instruction value corresponding to the preset reduction amount. The drive source 11 outputs power corresponding to the torque instruction value. In the power reduction process (S18), the control device 8 can change the power from the drive source 11 over time in accordance with the preset torque correction pattern.

If the time to end the power reduction process has arrived (Yes in S19), the control device 8 ends the power reduction process (S18).

The control device 8 ends the power reduction process based on the rotational synchronization estimated time obtained in step S15. Specifically, in step S19, the control device 8 determines that the end time has arrived if the rotational synchronization estimated time is shorter than the response time of the drive source 11. Accordingly, the output torque of the drive source 11 stops decreasing in accordance with the time of rotational synchronization.

Thereafter, the control device 8 ends the state switching process illustrated in FIG. 6.

The time to end the power reduction process is controlled based on the gear stage detected by the gear stage detector 55. After the non-transmission state is switched to the acceleration transmission state as a result of dog engagement between the first dog elements D1 and the second dog elements D2, an energy generated by the inertia of the drive source 11 is transmitted via the first dog elements D1 and the second dog elements D2. A period in which the energy is transmitted as the transmission torque is affected mainly by the inertias and the damper characteristics of the members disposed downstream of the second dog elements D2, such as the driving wheel 5, and by an apparent torque viewed from the driving wheel 5. The inertias and the damper characteristics of the members disposed downstream of the second dog elements D2 can be deemed as the characteristics specific to the vehicle 1. As described above, the time to end the power reduction process is controlled based on the gear stage. Thanks to this, the period of the power reduction process is likely to become precisely suitable for a period in which the energy is transmitted as the transmission torque.

More specifically, the time to end the process is changed based on the output torque from the drive source 11 detected by the torque detector 19 and the gear stage detected by the gear stage detector 55.

If it is determined in step S12 that the deceleration transmission state has not been switched to the acceleration state (No in S12), the control device 8 determines whether or not the acceleration state has been switched to the deceleration transmission state (S22).

If the acceleration state has been switched to the deceleration transmission state (Yes in S22), the control device 8 performs processes (S23 to S29) similar to those of steps S13 to S19 described above. However, steps S23 to S29 execute the power increase process (S28), which is reverse to the process performed by steps S13 to S19. The power increase process (S28) refers to a process for increasing a transmission torque to be transmitted between the first dog elements D1 and the second dog elements D2.

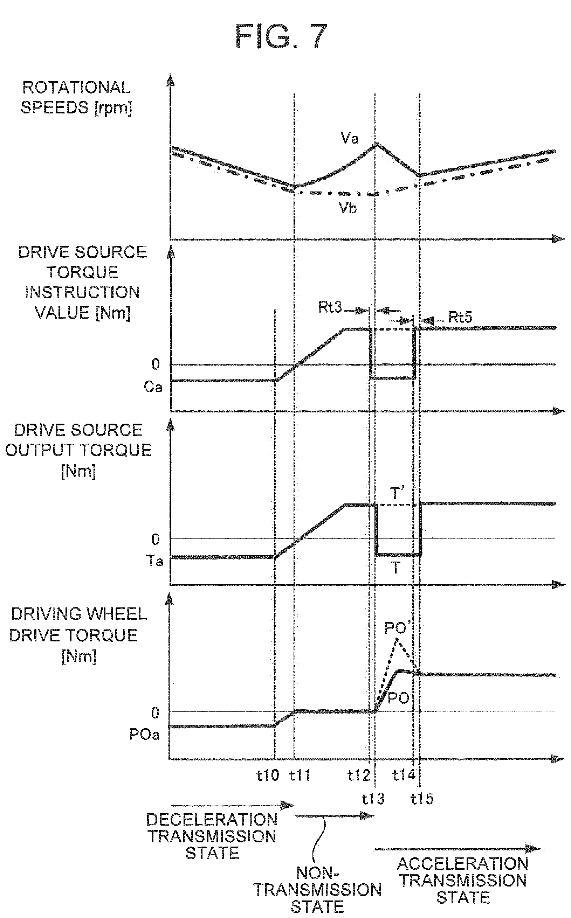

FIG. 7 is a time chart illustrating changes in rotational speeds, torque instruction value for the drive source, output torque from the drive source, and drive torque of the driving wheel observed when the deceleration state is switched to the acceleration state.

FIG. 7 illustrates the changes observed when the state of the drive source 11 of the vehicle 1 is switched from the deceleration state to the acceleration state. Namely, FIG. 7 illustrates the changes observed when the power reduction process is executed. Variations in output torque T from the drive source correspond to variations in output torque from the power shaft 11. FIG. 7 shows, as the rotational speed, a power shaft rotational speed Va and a driving wheel rotational speed Vb. Similarly to the chart in FIG. 4, the rotational speed Va of the power shaft indicates the rotational speed of the power shaft 90. The rotational speed Vb of the driving wheel is indicated by a conversion value corresponding to the rotational speed of the power shaft 90. The rotational speed Vb of the driving wheel indicates a speed of the vehicle 1. The drive source torque instruction value is an instruction value that is to be outputted from the control device 8 to the engine serving as the drive source 11. Times to start and end the power reduction process and the power increase process emerge as times at which the instruction value changes. The drive torque PO of the driving wheel is substantially a force with which the driving wheel 5 drives the vehicle 1. It can be considered that the drive torque PO illustrated in FIG. 7 substantially indicates the drive torque to be supplied from the output shaft 30 of the stepped transmission device 13 to the driving wheel 5.

In the example illustrated in FIG. 7, the drive source 11 outputs a negative torque Ta in the deceleration transmission state. The drive source 11 is driven by a torque supplied from the driving wheel 5. Namely, so-called engine braking is operating. In a period prior to time t11, the drive torque PO of the driving wheel 5 has a negative value POa.

At time t10, an opening angle of the throttle valve 105 (see FIG. 1) increases, e.g., in response to driver's manipulation. Consequently, at time t11, the state of the drive source 11 is switched from the deceleration state to the acceleration state. During a period from time t11 to time t13, the first dog elements D1 and the second dog elements D2 are in the non-transmission state (FIG. 3(A)) where dog engagement between the first dog elements D1 and the second dog elements D2 is not established.

While being in the non-transmission state, the driven gear 32 rotates by the backlash angle Acl, as illustrated in FIG. 3(B). During this period, the drive torque outputted from the output shaft 30 of the stepped transmission device 13 to the driving wheel 5 is zero. Namely, during the period from time t11 to time 113, the driving wheel 5 is not driven by the drive source 11. Thus, a rate of increase in the rotational speed Va of the power shaft 90 during this period is higher than that during a period after time t15, for example. Thus, the driven gear 32 is accelerated at a high rate in conjunction with the power shaft 90.

At time t13, dog engagement between the first dog elements D1 and the second dog elements D2 is established. Consequently, the non-transmission state is switched to the acceleration transmission state. The angular momentum resulting from the rotation accelerated over the period from time t11 to time t13 with the first dog elements D1 and the second dog elements D2 being in the non-transmission state is transmitted from the driven gear 32 to the dog ring 37c (see FIG. 3(C)).

The control device 8 executes the power reduction process (S18 in FIG. 6).

The control device 8 starts the power reduction process (S18 in FIG. 6) in such a manner that the output torque from the drive source 11 starts decreasing at the time at which dog engagement between the first dog elements D1 and the second dog elements D2 is established.

Specifically, the control device 8 starts the power reduction process based on the dog engagement estimated time having been calculated. More specifically, the control device 8 starts the power reduction process based on the dog engagement estimated time having been calculated and the response time of the drive source 11.

The control device 8 starts the power reduction process at time t12, which is earlier than time t13 of the dog engagement by response time Rt3 of the drive source 11. The response time of the drive source 11 has a value that varies depending on the time when the process starts. The response time indicated by Rt3 in FIG. 7 is the response time at the time.

At time t13, at which the response time Rt3 of the drive source 11 has elapsed since the start of the power reduction process, the output torque from the drive source 11 starts decreasing. In accordance with the time at which the dog engagement is established, the torque of the drive source 11 starts decreasing.

The control device 8 ends the power reduction process (S18 in FIG. 6) in such a manner that the output torque from the drive source 11 stops decreasing at the time at which the rotation of the power shaft 90 synchronizes with the rotation of the driving wheel.

Specifically, the control device 8 ends the power reduction process based on the rotational synchronization estimated time. More specifically, the control device 8 ends the power reduction process based on the rotational synchronization estimated time having been calculated and the response time of the drive source 11.

Thus, the control device 8 ends the power reduction process at time t14, which is earlier than time t15 of the dog engagement by response time Rt5 of the drive source 11. The response time Rt5 of the drive source 11 has a value that varies depending on the time when the process ends. The response time indicated by Rt3 in FIG. 7 is the response time at the time.

As described above, the control device 8 executes the power reduction process (S18 in FIG. 6) for a period from time t12 to time t14. Accordingly, the output torque from the drive source 11 decreases in the period from time t13 to time t15. The reference sign T' in FIG. 7 denotes, for example, an output torque from the drive source 11 that may be observed if the power reduction process (S18 in FIG. 6) is not executed. Execution of the power reduction process (S18 in FIG. 6) reduces the output torque from the drive source 11, as compared to a case where the power reduction process (S18 in FIG. 6) is not executed.

This can suppress a phenomenon that the drive torque for driving the driving wheel 5 transmitted from the stepped transmission device 13 increases as a result of dog engagement between the first dog elements D1 and the second dog elements D2 established at time t15.

For example, if the power reduction process is not executed, the output torque from the drive source 11 and the angular momentum of the power shaft 90 having been accelerated in the non-transmission state during the period from time t11 to time t13 are transmitted from the driven gear 32 to the dog ring 37c at a time equal to or after time t13. Specifically, the angular momentum of the power shaft 90 is transmitted via the first dog elements D 1 and the second dog elements D2. Due to the angular momentum thus transmitted and the output torque of the drive source 11, a shock caused by the drive torque, such as those indicated by PO' in FIG. 7, is applied to the driving wheel 5 and the vehicle 1.

The angular momentum transmitted in this manner is generated by the inertia of the drive source 11, more specifically, by the inertias of the piston 103, the power shaft 90, the clutch 12, the input shaft 20, and the driven gear 32, for example. Meanwhile, the driving wheel 5, which receives the angular momentum, also has the inertia. In addition, a power transmission path extending from the dog ring 37c to the driving wheel 5 includes a damper element for temporarily absorbing a change in torque transmitted thereto. The damper element is attained by deformation of the hub damper 5c, for example. Thus, the angular momentum of the power shaft 90 having been accelerated in the non-transmission state is transmitted taking time, i.e., over a period from time t13 to time t15. A time period required to transmit the angular momentum depends on a time response characteristic of the damper element.

According to the present embodiment, at the time (time t13) at which dog engagement between the first dog elements D1 and the second dog elements D2 is established, the torque of the drive source 11 starts decreasing. Namely, the torque of the drive source 11 decreases when transmission of the angular momentum of the power shaft 90 starts. Thus, even if there is a rotational speed difference between the first dog elements D1 and the second dog elements D2 at the time of the dog engagement, the angular momentum transmitted toward the driving wheel 5 is reduced. The angular momentum that is transmitted is absorbed by the damper element, for example. This can suppress a change in drive torque of the driving wheel 5, as indicated by PO in FIG. 7. In this manner, the power reduction process can suppress a shock to the vehicle 1 (S18 in FIG. 6).

In a period prior to time t11 in the time chart of FIG. 7, the deceleration transmission state continues. In the deceleration transmission state, dog engagement between the first dog elements D1 and the second dog elements D2 is established, and consequently the torque from the driving wheel 5 is transmitted to the drive source 11. At time t11, the state of the drive source 11 is switched from the deceleration state to the acceleration state. Consequently, the state of the dog engagement is switched to the non-transmission state.

As described with reference to the flowchart in FIG. 6, the power reduction process (S18) of the control device 8 is executed when the state of the drive source 11 is switched from the deceleration transmission state to the acceleration state (Yes in S12). Thus, at a time later than t11, at which the deceleration transmission state is switched to the non-transmission state, the control device 8 starts the power reduction process (S18). This can reduce a time period until the establishment of the dog engagement, as compared to a case where the power reduction process is started at a time prior to time t11.

The process of setting the time (S15 in FIG. 6) sets a time to end the power reduction process. This process sets, as the time to end the power reduction process, a time prior to time t15, at which discharge of the angular momentum of the driven gear 32 having been accelerated in the non-transmission state is completed. Accordingly, after the power reduction process is started, the control device 8 ends the power reduction process at the time prior to time t15, at which the rate of change in the rotational speed Va of the input shaft and the rate of change in the rotational speed Vb of the driving wheel synchronize with each other. This can suppress a phenomenon that a torque in a reverse direction is outputted due to the power reduction process after transmission of the torque generated by the angular momenta of the power shaft 90 and the driven gear 32 having been accelerated while the first dog elements D1 and the second dog elements D2 are in the non-transmission state. This enables smoother acceleration.

In order to set the time to end the power reduction process, the control device 8 can refer to the time at which the rotational speed Va of the power shaft synchronizes with the rotational speed Vb of the driving wheel.

As a result of the power reduction process performed by the control device 8 described with reference to FIG. 7, the output torque from the drive source 11 starts decreasing at time t13, at which dog engagement between the first dog elements D1 and the second dog elements D2 is established. In addition, as a result of the power reduction process performed by the control device 8, the output torque from the drive source 11 stops decreasing at time t15, at which discharge of the angular momentum of the driven gear 32 having been accelerated in the non-transmission state is completed.

The time at which the torque of the drive source 11 starts decreasing may not coincide with time t13, at which the dog engagement between the first dog elements D1 and the second dog elements D2 is established. However, the time at which the output torque from the drive source 11 starts decreasing is preferably close to time t13, at which the dog engagement between the first dog elements D1 and the second dog elements D2 is established.

The control device 8 of the present embodiment controls the time to start at least one of the power reduction process or the power increase process so that the time comes between a time one engine cycle earlier than the time of switching of the state from the non-transmission state to the acceleration transmission state or the deceleration transmission state and the time of the switching.

As a result of the power reduction process or the power increase process of the present embodiment, the output torque is controlled by the amount by which the engine ignition time is delayed. As described above, the process is started between the time one engine cycle earlier than the switching time and the switching time. Consequently, even if the engine is a single-cylinder engine, it is possible to easily change the delay amount of the ignition time by selecting, from among ignition times that come one after another, at least an ignition time prior to the switching time or an engine ignition time that comes next. Transmission of the torque generated by the rotational speed difference and the inertia starts at the switching time. According to the present embodiment, the output torque of the engine is controlled in accordance with the time at which the torque generated by the rotational speed difference and the inertia is transmitted. This suppresses the torque generated by the rotational speed difference and the inertia from being transmitted to the driving wheel. Consequently, a shock to the vehicle 1 can be suppressed.

In addition, the control device 8 preferably controls the time to start at least one of the power reduction process or the power increase process so that the time comes between a time one engine combustion period earlier than the time of switching of the state from the non-transmission state to the acceleration transmission state or the deceleration transmission state and the time of the switching. The one engine combustion period refers to a combustion interval of the engine serving as the drive source 11. For example, in a case where the engine serving as the drive source 11 is a single-cylinder engine, the one engine combustion period corresponds to one engine cycle. Meanwhile, in a case where the engine is an engine with a plurality of cylinders, the one combustion period corresponds to each of combustion intervals between the cylinders which cause combustions one after another. For example, in a case where the drive source 11 is a four-cylinder engine, the one combustion period corresponds to one-fourth of a cycle.

As described above, the process is started between the time one engine combustion period earlier than the switching time and the switching time. Consequently, even if the engine is a multi-cylinder engine, it is possible to easily change the delay amount of the ignition time by selecting, from among ignition times that come one after another, at least an ignition time prior to the switching time or an engine ignition time that comes next. According to the present embodiment, the output torque of the engine is controlled in accordance with the time at which the torque generated by the rotational speed difference and the inertia is transmitted. This suppresses the output generated by the rotational speed difference and the inertia from being transmitted to the driving wheel.

In the process for setting the time of the power reduction process (S15), the control device 8 of the present embodiment sets the time to start the power reduction process based on the output torque from the drive source 11, rather than based on the rotational speed of the power shaft 90. Specifically, the control device 8 calculates the dog engagement estimated time based on the output torque from the drive source 11. As the output torque becomes larger, the time to start the power reduction process is set earlier.

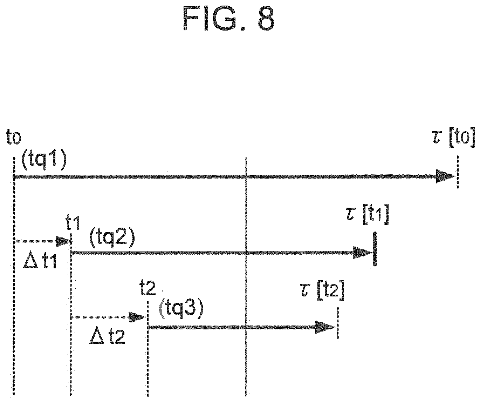

FIG. 8 is a time chart for explaining the dog engagement estimated time obtained by the process for obtaining the dog engagement estimated time illustrated in FIG. 6.

In the process for obtaining the dog engagement estimated time (S15 in FIG. 6), the control device 8 calculates a dog engagement estimated time based on an output torque from the drive source 11. For example, a rate of change in output torque measured in the process for obtaining the dog engagement estimated time (S15 in FIG. 6) is used to calculate a time period until the non-transmission state is attained. Also, an integral of an estimated output torque is used to calculate a time period between the non-transmission state and the acceleration transmission state. The obtaining of the dog engagement estimated time involves use of a constant that has been predetermined according to the amount of the backlash between the dog elements.

In the present embodiment, the process for obtaining the dog engagement estimated time is repeatedly executed until the power reduction process (S18) is started. In the calculation illustrated in FIG. 8, the process for obtaining the dog engagement estimated time is executed three times repeatedly. The process for obtaining the dog engagement estimated time is conducted three times at time t0, time t1, and time t2.

In the process for obtaining the dog engagement estimated time conducted for the first time at time t0, the control device 8 obtains a dog engagement estimated time τ[t0] based on an output torque tq1. For example, when the output torque tq1 has a negative value, i.e., the dog elements have not entered the non-transmission state yet, the control device 8 calculates a time period taken for the output torque tq1 to become zero, based on the output torque tq1 and a rate of change over time in output torque. In addition, the control device 8 calculates a time period until the establishment of dog engagement after the output torque tq1 exceeds zero and the non-transmission state starts. The control device 8 calculates the time period until the establishment of the dog engagement based on the output torque tq1. The sum of the time period taken for the output torque tq1 to become zero and the time period until the establishment of the dog engagement after the output torque tq1 exceeds zero is obtained as the dog engagement estimated time τ[t0].

For example, in a case where a relative position between the dog elements D1 and D2 is calculated based on a relative speed between the dog elements D1 and D2, none of the relative speed and the relative position have become apparent, unless the non-transmission state of the dog elements has started. In this case, it is substantially impossible to start the estimation of engagement between the dog elements until the non-transmission state of the dog elements starts. For example, in a case of a configuration including dog elements D1 and D2 provided to have small backlash therebetween, a time period between the start of the non-transmission state of the dog elements and the dog engagement between the dog elements is short. In such a configuration, if the estimation of the dog engagement is conducted after the start of the non-transmission state of the dog elements, the estimation of the dog engagement may not be completed before actual dog engagement.

On the contrary, according to the present embodiment, the estimated engagement time is calculated based on the output torque. Therefore, it is possible to obtain a rough value of the estimated engagement time before the start of the non-transmission state of the dog elements. Thus, even in the configuration including the dog elements D1 and D2 provided have small backlash therebetween, it is possible to control the output from the drive source in accordance with the time of the dog engagement.

The output torque and the relative speed between the dog elements D1 and D2 may potentially change with a lapse of time. In order to deal with this, the control device 8 corrects the dog engagement estimated time by repeatedly performing the process for obtaining the dog engagement estimated time until the power reduction process (S18) is started.

In the process for obtaining the dog engagement estimated time conducted for the second time at time t1, the control device 8 obtains an updated dog engagement estimated time τ[t1] based on an output torque tq2 at time t1.

In the calculation for the dog engagement estimated time τ[t1], the control device 8 first subtracts, from the dog engagement estimated time τ[t0] having been calculated in the previous obtaining process, a time period Δt1 elapsed after the previous obtaining process. Next, for example, the control device 8 corrects the dog engagement estimated time based on the difference between the output torque tq2 obtained at time t1 in the process conducted for this time and the output torque tq1 obtained at time t0 in the process conducted for the previous time. As a result, the control device 8 obtains the dog engagement estimated time τ[t1] at time t1.

In the process for obtaining the dog engagement estimated time conducted for the third time at time t2, the control device 8 obtains an updated dog engagement estimated time τ[t2] based on an output torque tq3 at time t2, in a manner similar to the process conducted for the second time.

After the non-transmission state of the dog members has started, the dog engagement estimated time may be obtained in the following manner. That is, for example, a relative speed between the dog elements D1 and D2 may be detected, and the dog engagement estimated time may be corrected based on the relative speed thus detected.

τ[tt] in FIG. 8 denotes an actual dog engagement time. The dog engagement estimated times τ[t0], τ[t1], τ[t2], ... are calculated by the process for obtaining the dog engagement estimated time. Generally, as the process is performed repeatedly, the resulting dog engagement estimated time indicates a more accurate time period τ[tt] until the actual time of the dog engagement.

As described above, the control device 8 of the present embodiment can obtain an accurate time when the state is switched to the non-transmission state, and thus can reduce the output torque in accordance with the time at which the state is switched to the non-transmission state. This can suppress the torque generated by the rotational speed difference and the inertia from being transmitted to the driving wheel.

In addition, the control device 8 of the present embodiment starts the power reduction process also in consideration of response time of output from the engine serving as the drive source 11. In step S17 in FIG. 6, the control device 8 makes the determination, in consideration of the response time of output from the drive source 11.

Specifically, the control device 8 of the present embodiment does not start the power reduction process when the dog engagement estimated time τ calculated in the process for obtaining the dog engagement estimated time becomes zero. Rather, the control device 8 of the present embodiment starts the power reduction process before the calculated dog engagement estimated time becomes zero.

More specifically, the control device 8 starts the power reduction process based on a result of comparison between the calculated dog engagement estimated time and the response time of the output from the drive source 11. Further specifically, the control device 8 starts the power reduction process when the calculated dog engagement estimated time is shorter than the response time of the output from the drive source 11.

As described above, the response time of the drive source 11 corresponds to a time period between the output of the instruction value by the control device 8 and the arrival of the ignition time. The time period between the output of the instruction value by the control device 8 and the arrival of the ignition time varies depending on the time of the output of the instruction value by the control device 8. Namely, the response time of the drive source 11 varies as the power shaft 90 rotates.

The control device 8 of the present embodiment obtains the response time of the drive source 11 that varies as the power shaft 90 rotates, and starts the power reduction process based on the result of comparison between the calculated dog engagement estimated time and the response time of the output from the drive source 11.

The method for obtaining the dog engagement estimated time is not limited to calculation. Alternatively, for example, it is possible to obtain the dog engagement estimated time by referring to a map generated by an experiment or a simulation.

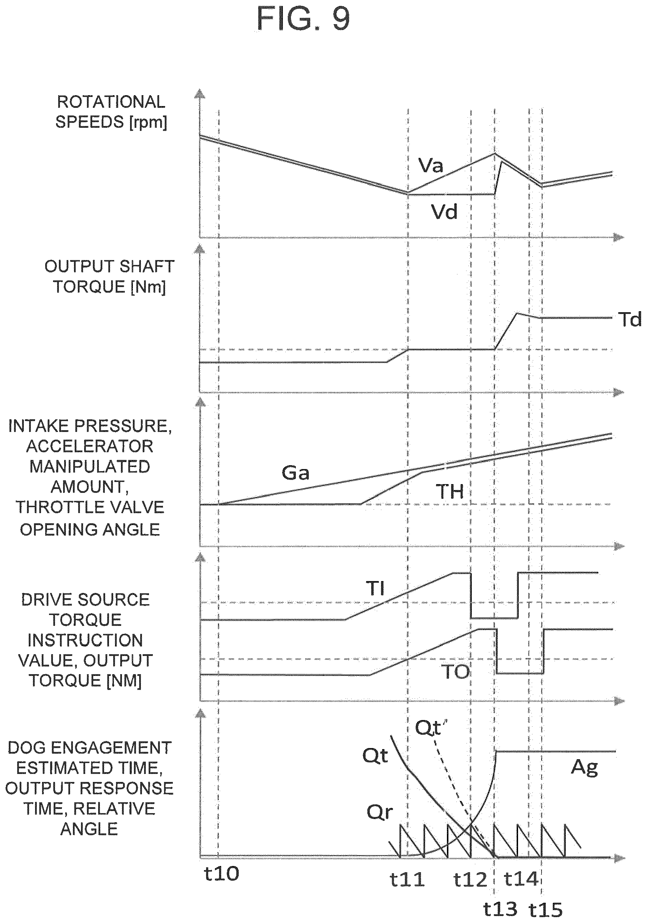

FIG. 9 is a time chart illustrating an example of measurement of a behavior of the vehicle 1 of the present embodiment when the deceleration state is switched to the acceleration state.

In the time chart of FIG. 9, Va denotes a rotational speed of the power shaft 90 in the vehicle 1 of the present embodiment. Vd denotes a rotational speed of the output shaft 30. Td denotes a torque applied to the output shaft 30. Ga denotes an amount of manipulation of the accelerator operator. TH denotes an opening angle of the throttle valve 105. TI denotes an instruction value for a torque of the drive source 11. TO indicates an output torque from the drive source 11.

Qt denotes a dog engagement estimated time. Qr denotes response time of output from the drive source 11. Ag denotes a relative angle between the first dog elements D1 and the second dog elements D2. The dog engagement estimated time Qt and the response time Qr of the output are values obtained by calculation performed in the control device 8. A display scale for the dog engagement estimated time Qt is enlarged for comparison with the response time Qr of the output. Thus, some of the dog engagement estimated time Qt indicate actual values, and the rest of the dog engagement estimated time Qt merely indicates a maximum value of the display scale. The relative angle Ag may also be used to calculate or correct the dog engagement estimated time. Qt' will be described in a second embodiment.

Times t10 to t15 respectively correspond to those with the same reference signs given to the events in FIG. 7.

For better understanding of the control, FIG. 9 shows the behavior observed in a case where a time period between the start of manipulation of the accelerator and the start of the non-transmission state is longer than that of FIG. 7.

At time t10 in FIG. 9, the control device 8 determines that the deceleration state has been switched to the acceleration state (Yes in S12 in FIG. 6), based on the accelerator manipulated amount Ga.

As the accelerator manipulated amount Ga increases, the control device 8 performs control to increase the throttle valve opening angle TH gradually. In conjunction with this, the output torque TO from the drive source 11 also increases gradually. In the example shown in FIG. 9, the throttle valve opening angle TH starts increasing later than the manipulation of the accelerator. Accordingly, the output torque TO from the drive source 11 also starts increasing later than the manipulation of the accelerator.

When the control device 8 determines that the deceleration state has been switched to the acceleration state, the control device 8 detects the output torque TO from the drive source 11, and sets a time of the process based on the output torque TO (S15 in FIG. 6). Specifically, the control device 8 uses the output torque TO to calculate the dog engagement estimated time Qt. The control device 8 repeats detection of the output torque TO and calculation of the dog engagement estimated time until the time to start the power reduction process arrives.

At time t11, at which the output torque TO from the drive source 11 becomes zero, the first dog elements D1 and the second dog elements D2 are brought into the non-transmission state. Consequently, the torque Td applied to the output shaft 30 becomes zero. Meanwhile, the rotational speed Va of the drive source 11 increases. A rate of change in the rotational speed Va of the drive source 11 is greater than a rate of change in the rotational speed of the output shaft 30. The first dog elements D1 move relative to the second dog elements D2.

The dog engagement estimated time Qt calculated by the control device 8 decreases with a lapse of time. The chart in FIG. 9 shows that the dog engagement estimated time Qt decreases in a period between time t11 and time t12.

The control device 8 constantly obtains the response time Qr of the drive source 11. The response time Qr of the drive source 11 corresponds to a time period until the arrival of the ignition time. Thus, the response time Qr of the drive source 11 changes with a lapse of time.

The dog engagement estimated time Qt changes such that the dog engagement estimated time Qt becomes zero at time t13. The control device 8 starts the power reduction process before the dog engagement estimated time Qt becomes zero. Specifically, the control device 8 starts the power reduction process when the dog engagement estimated time is shorter than the response time of output from the drive source 11. As illustrated in FIG. 9, at time t12, the dog engagement estimated time Qt becomes shorter than the response time Qr of output from the drive source 11. Thus, at time t12, the control device 8 starts the power reduction process. Upon the start of the power reduction process, the instruction value TI for the torque of the drive source 11 decreases. Consequently, at time t13, which is an ignition time immediately after the reduction of the instruction value TI, the output torque TO from the drive source 11 decreases.

As indicated by the relative angle Ag between the first dog elements D1 and the second dog elements D2, dog engagement between the first dog elements D1 and the second dog elements D2 is established at time t13. The first dog elements D1 and the second dog elements D2 are brought into the acceleration transmission state from the non-transmission state. Consequently, the rotational speed of the output shaft 30 increases rapidly. The torque Td on the output shaft 30 also increases.

However, since the output torque decreases at time t13, an increase amount of the torque Td on the output shaft 30 can be kept low.

Thereafter, the control device 8 ends the power reduction process. At time t14, a rotational synchronization estimated time (not illustrated) becomes shorter than the response time Qr of the drive source 11. Thus, the control device 8 ends the power reduction process. As a result, at time t15, the torque of the drive source 11 increases.

The above description has dealt with the case where the power reduction process is executed when the deceleration state is switched to the acceleration state. Meanwhile, the control device 8 of the present embodiment executes the power increase process when the state of the drive source 11 is switched from the acceleration state to the deceleration state. A direction of the torque and changes in the rotational speeds when the power increase process is executed are reverse to those of the power reduction process. The other processes in the power increase process, such as a process for calculating a time, are identical to those in the power reduction process.

Steps S23 to S29 in FIG. 6 execute the power increase process (S28), which is reverse to the process performed by steps S13 to S19.

Specifically, the control device 8 detects a gear stage currently selected by the stepped transmission device 13 (S23). Subsequently, the control device 8 detects an output torque as a torque correlation quantity related to the drive source 11 (S24).

Subsequently, the control device 8 sets a time of the power increase process (S25). The control device 8 sets a time to start the power increase process and a time to end the power increase process. Specifically, the control device 8 obtains a dog engagement estimated time.

As the output torque becomes larger, a time period until the start of the power increase process is set shorter. The control device 8 obtains the dog engagement estimated time based on the torque from the drive source 11. Meanwhile, as a lower gear stage is selected, a time period until the end of the power increase process is set longer. Namely, as a gear ratio of the stepped transmission device 13 is larger, the time period until the time to end the power increase process is set longer. In addition, as the torque becomes larger, the time period until the time to end the power increase process is set longer. Subsequently, the control device 8 sets an amount (increase amount) of output torque from the drive source 11 to be increased by the power increase process (S26).

If it is determined that the time to start the power increase process has arrived (Yes in S27), the control device 8 starts the power increase process (S28). The output torque from the drive source 11 rises in accordance with the time of dog engagement.

If the time to end the power increase process has arrived (Yes in S29), the control device 8 ends the power increase process (S28). The output torque from the drive source 11 stops increasing in accordance with the time of rotational synchronization.

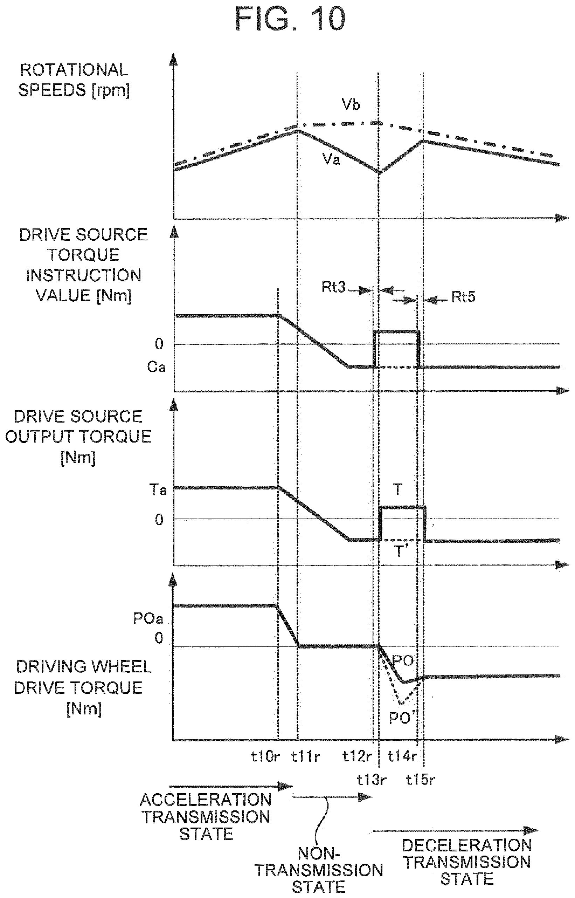

FIG. 10 is a time chart illustrating changes in rotational speeds, torque instruction value for the drive source, output torque from the drive source, and drive torque of the driving wheel observed when the acceleration state is switched to the deceleration state.

In the example illustrated in FIG. 10, the drive source 11 outputs a positive torque Ta in the acceleration transmission state. The drive source 11 is driving the driving wheel 5. In a period prior to time t11r, the drive torque PO of the driving wheel 5 has a positive value POa.

At time t10r, an opening angle of the throttle valve 105 (see FIG. 1) decreases, e.g., in response to driver's manipulation. Consequently, at time t11r, the state of the drive source 11 is switched from the acceleration state to the deceleration state. In a period from time t11r to time t13r, the first dog elements D1 and the second dog elements D2 are in the non-transmission state (FIG. 3(A)) where dog engagement between the first dog elements D1 and the second dog elements D2 is not established.

In the non-transmission state, the driven gear 32 rotates by the backlash angle Acl, as illustrated in FIG. 3(B). During this period, the drive torque outputted from the output shaft 30 of the stepped transmission device 13 to the driving wheel 5 is zero. Namely, in the period from time t11r to time t13r, the driving wheel 5 is not driven by the drive source 11. Thus, an absolute value of a rate of reduction of the rotational speed Va of the power shaft 90 during this period is higher than that during a period after time t15, for example. Thus, the driven gear 32 is accelerated at a high rate in conjunction with the power shaft 90.

At time t13r, dog engagement between the first dog elements D1 and the second dog elements D2 is established. Consequently, the non-transmission state is switched to the deceleration transmission state. The angular momentum resulting from the rotation decelerated over the period from time t11r to time t13r with the first dog elements D1 and the second dog elements D2 being in the non-transmission state is transmitted from the driven gear 32 to the dog ring 37c (see FIG. 3(C)).

The control device 8 executes the power increase process (S28 in FIG. 6).

The control device 8 starts the power increase process (S28 in FIG. 6) so that the output torque from the drive source 11 starts increasing at the timing at which dog engagement between the first dog elements D1 and the second dog elements D2 is established.

Specifically, the control device 8 starts the power increase process based on a dog engagement estimated time having been calculated. More specifically, the control device 8 starts the power increase process based on the dog engagement estimated time having been calculated and the response time of the drive source 11.

Thus, the control device 8 starts the power increase process at time t12r, which is earlier than time t13r of the dog engagement by response time Rt3 of the drive source 11. The response time of the drive source 11 has a value that varies depending on the time when the process starts.

At time t13r, at which the response time Rt3 of the drive source 11 has elapsed since the start of the power increase process, the output torque from the drive source 11 starts increasing. In accordance with the time at which the dog engagement is established, the output torque from the drive source 11 starts increasing.

The control device 8 ends the power increase process (S28 in FIG. 6) in such a manner that the output torque from the drive source 11 stops increasing at the timing at which the rotation of the power shaft 90 synchronizes with the rotation of the driving wheel.

Specifically, the control device 8 ends the power increase process based on the rotational synchronization estimated time. More specifically, the control device 8 ends the power increase process based on the rotational synchronization estimated time having been calculated and the response time of the drive source 11.

Thus, the control device 8 ends the power increase process at time t14r, which is earlier than time t15r of the dog engagement by response time Rt5 of the drive source 11. The response time Rt5 of the drive source 11 has a value that varies depending on the time when the process ends.

As described above, the control device 8 executes the power increase process (S28 in FIG. 6) for a period from time t12r to time t14r. Accordingly, the torque from the drive source 11 increases during the period from time t13r to time t15r. The reference sign T' in FIG. 7 denotes, for example, an output torque from the drive source 11 that may be observed if the power increase process (S28 in FIG. 6) is not executed. Execution of the power increase process (S28 in FIG. 6) increases the output power from the drive source 11, as compared to a case where the power increase process (S28 in FIG. 6) is not executed.

This can suppress a phenomenon that the drive torque for driving the driving wheel 5 transmitted from the stepped transmission device 13 decreases as a result of dog engagement between the first dog elements D 1 and the second dog elements D2 established at time t15r.

According to the present embodiment, at the timing (time t13r) at which dog engagement between the first dog elements D1 and the second dog elements D2 is established, the output torque of the drive source 11 starts increasing. Namely, the torque of the drive source 11 increases when transmission of the angular momentum (the angular momentum for deceleration) of the power shaft 90 starts. Thus, even if there is a rotational speed difference between the first dog elements D1 and the second dog elements D2 at the time of the dog engagement, the angular momentum for deceleration transmitted toward the driving wheel 5 is reduced. The angular momentum that is transmitted is absorbed by the damper element, for example. This can suppress a change in drive torque of the driving wheel 5, as indicated by PO in FIG. 10. In this manner, the power increase process can suppress a shock to the vehicle 1 (S28 in FIG. 6).

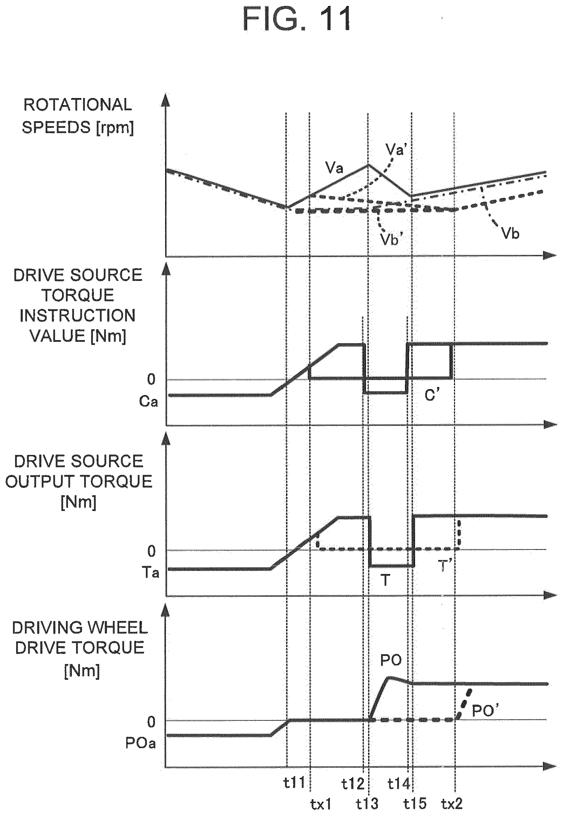

FIG. 11 is a time chart, related to a reference example, for illustrating transition of a state.

FIG. 11 shows, on the time chart of the present embodiment illustrated in FIG. 7, broken lines indicating transition of the state in the reference example.

In the reference example shown in FIG. 11, control is performed so that there is almost no relative rotational speed between the input shaft and the output shaft at the time of dog engagement. For this purpose, in this reference example, the power reduction process is started upon detection of the non-transmission state. In the reference example, the power reduction process is started at time tx1. With the control according to the reference example, the power reduction process is performed in the non-transmission state. This suppresses an increase in rotational speed Va' of the power shaft in the non-transmission state. FIG. 11 shows that the rotational speed Va' of the power shaft is reduced. Consequently, at time tx2 at which dog engagement is established, there is almost no relative rotational speed between the input shaft and the output shaft. This can suppress a drastic change (e.g., a change indicated by PO' in FIG. 7) in drive torque transmitted to the driving wheel at time tx2 at which the dog engagement is established. Consequently, a shock to the vehicle can be suppressed.

However, since the control according to the reference example illustrated in FIG. 11 executes the power reduction process to suppress an increase in the rotational speed of the power shaft in the non-transmission state, it takes longer time until the establishment of the dog engagement. In the example in FIG. 11, the dog engagement is established at time tx2. Thus, with the control according to the reference example, the non-transmission state continues from time t11 to time tx2. Consequently, the control according to the reference example involves a poor acceleration response.

On the contrary, the control device 8 of the present embodiment controls time t12 to start the power reduction process based on the torque from the drive source. This can make the time to reduce the output torque by the power reduction process accurately coincide with time t13, at which the dog engagement is established. This can suppress a shock to the vehicle even when the angular momentum from the drive source is reduced after the time at which the state is switched to the acceleration transmission state.

The control device 8 of the present embodiment does not need to perform the control for power reduction for a long period before the dog engagement in order to suppress a shock to the vehicle. This can shorten the period of the non-transmission state, thereby improving the acceleration response.

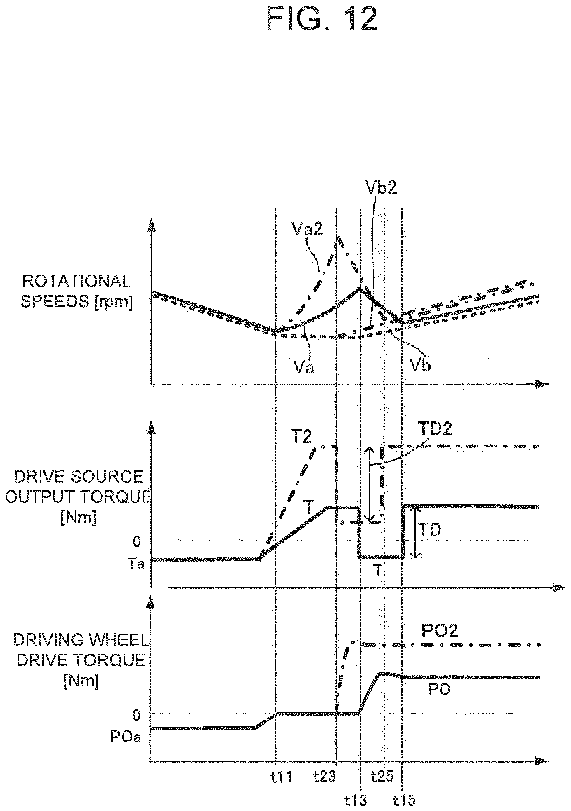

FIG. 12 is a time chart, related to the vehicle 1 of the present embodiment, for illustrating changes in rotational speeds, output torque from the drive source, and drive torque of the driving wheel for different output torques from the drive source 11, observed when the deceleration state is switched to the acceleration state.

A rotational speed Va of the power shaft, a rotational speed Vb of the driving wheel, and an output torque from the drive source in FIG. 12 are identical to those of FIG. 8.

An output torque T2 from the drive source indicates a torque outputted from the drive source 11, e.g., in response to a manipulation, the torque being larger than the output torque T from the drive source in FIG. 7. As a torque outputted from the drive source 11 increases, an amount of increase in the rotational speed Va of the power shaft also becomes larger.

Consequently, time t23 at which dog engagement between the first dog elements D1 and the second dog elements D2 is established, i.e., at which the rotational speed Va of the power shaft starts decreasing and the rotational speed Vb of the driving wheel starts increasing also becomes earlier than time t13 that has been described with reference to FIG. 7. In addition, a torque outputted from the drive source 11 prior to time t23 of the dog engagement is large.

As described above, the control device 8 of the present embodiment changes the time to start the power reduction process based on the output torque from the drive source that has been detected by the torque detector. As the output torque T from the drive source increases, the dog engagement estimated time calculated by the control device 8 becomes shorter. Therefore, time t23 at which the control device 8 starts the power reduction process in a case where the torque-related amount detected by the torque detector indicates a large output torque is earlier than time t13.

In addition, the control device 8 estimates, by calculation, speeds of the two types of dog elements D1 and D2 coming in contact with each other at the time of dog engagement. Based on the estimated speeds and the gear stage, the control device 8 sets an amount of output torque from the drive source 11 to be reduced by the power reduction process. Thus, as illustrated in FIG. 12, a reduction amount TD2 by which an output torque T2 from the drive source 11 is reduced by the power reduction process at time t23 is larger than a reduction amount TD by which an output torque T is reduced at time t13.

A time at which the output torque of the drive source 11 stops decreasing due to the power reduction process performed by the control device 8 is obtained based on the estimated speeds and the gear stage.

Specifically, in the process for setting the time of the power reduction process (S15 in FIG. 6), the control device 8 sets the time to end the power reduction process based on the speeds estimated by calculation performed based on the torque and the gear stage that is currently selected.

The time to end the process for reducing the output torque of the drive source 11 by the power reduction process is preferably prior to a time at which a rate of change in rotational speed of the input shaft and a rate of change in speed of the vehicle synchronize with each other. Incidentally, with the stepped transmission device 13, upon completion of discharge of the angular momentum of the driven gear 32 accelerated in the non-transmission state, the rate of change in the rotational speed of the input shaft 20 and the rate of change in the speed of the vehicle 1 synchronize with each other. As a lower gear stage is selected, an apparent inertia of the drive source 11 viewed from the driving wheel 5 becomes larger. Namely, with the stepped transmission device 13, as a lower gear stage is selected, an apparent inertia of the driven gear 32 viewed from the dog ring 37c becomes larger. Therefore, it takes longer time until the discharge of the angular momentum of the driven gear 32 accelerated in the non-transmission state is completed.

On the contrary, as a higher gear stage is selected, it takes shorter time until the discharge of the angular momentum of the driven gear 32 accelerated in the non-transmission state is completed.

As a higher gear stage is selected, the control device 8 of the present embodiment sets the time to end the power reduction process earlier.

Thus, the time period of the power reduction process is defined by the time at which the rate of change in the rotational speed of the input shaft and the rate of change in the speed of the vehicle synchronize with each other, which time varies depending on the selected gear stage. In addition, as the time to end the power reduction process becomes earlier, the reduction amount by which the output torque is reduced by the power reduction process becomes larger.

In this manner, the control device 8 sets the time to end the power reduction process based on the gear stage or the speeds of the dog members coming in contact with each other. In addition, based on the gear stage or the speeds of the dog members coming in contact with each other, the reduction amount by which the power shaft output torque is reduced is set. By controlling the output torque from the drive source 11 in this manner, it is possible to suppress, with high precision, an excessive change in the output torque outputted from the output shaft when the non-transmission state is switched to the acceleration transmission state.

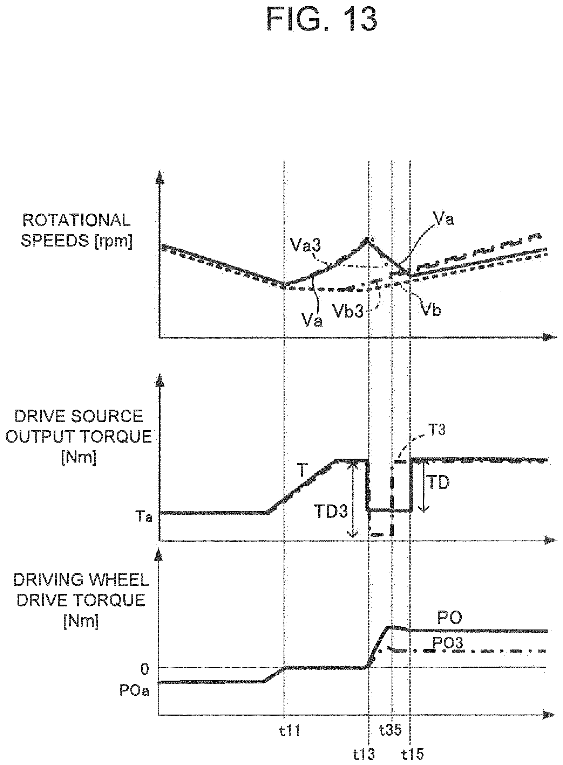

FIG. 13 is a time chart illustrating changes in rotational speeds, output torque from the drive source, and drive torque of the driving wheel observed at different gear stages.

A rotational speed Va of the power shaft, a rotational speed Vb of the driving wheel, an output torque T from the drive source, and a drive torque PO of the driving wheel in FIG. 13 are identical to those of FIG. 7.

An output torque T3 of the power shaft indicates an output torque from the drive source observed when a gear stage higher than that in FIG. 7 is selected. Time t35, at which a rate of change in rotational speed Va3 of the input shaft and a rate of change in rotational speed Vb3 of the driving wheel synchronize with each other when a relatively high gear stage is selected, is earlier than time t15, at the which the synchronization takes place when a low gear stage is selected.

As described above, the control device 8 of the present embodiment changes the time to end the power reduction process based on the gear stage detected by the gear stage detector. Thus, the power reduction process ends at the time at which the rate of change in the rotational speed Va3 of the input shaft and the rate of change in the rotational speed Vb3 of the driving wheel synchronize with each other at the selected gear stage. This can suppress a phenomenon that the drive torque PO3 of the driving wheel is affected by an excessive torque outputted from the output shaft when the non-transmission state is switched to the acceleration transmission state. Also, it is possible to suppress an effect that may otherwise be given by a reduction in output torque due to the power reduction process.

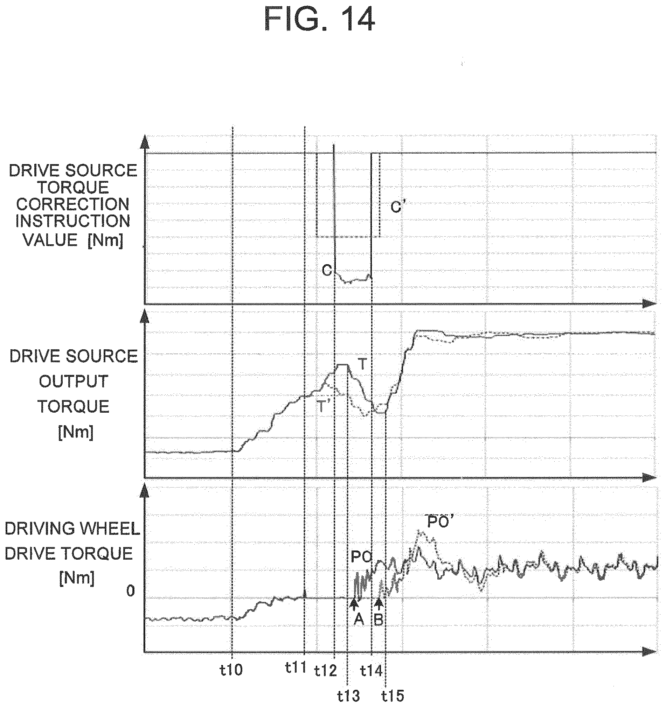

FIG. 14 is a time chart illustrating an example of measurement of a behavior of the vehicle 1 of the present embodiment when the deceleration transmission state is switched to the acceleration state.

FIG. 14 shows, as a reference example, broken lines indicating a behavior observed when control is performed so that there is almost no relative rotational speed between the input shaft and the output shaft at the time of dog engagement.

In the chart illustrated in FIG. 14, each of C and C' indicates a torque correction instruction value for the drive source of the control device. Each of T and T' indicates an output torque from the drive source. Each of PO and PO' indicates a drive torque of the driving wheel. C', T', and PO' denote values of the reference example. Times t10 to t15 respectively correspond to those with the same reference signs given to the events in FIG. 7.

At time t10, the control device 8 of the present embodiment determines that the deceleration state has been switched to the acceleration state based on the accelerator manipulated amount that changes the output torque T from the drive source. The control device 8 starts obtaining a dog engagement estimated time and making a determination as to whether to start the power reduction process.

At time t11, at which increase of the output torque T from the drive source 11 is ongoing, the first dog elements D1 and the second dog elements D2 are brought into the non-transmission state. This causes a relative position difference between the first dog elements D1 and the second dog elements D2.

At time t12, the control device 8 of the present embodiment starts the power reduction process. As a result of the start of the power reduction process, the output torque drops at time t13. The output torque drops in accordance with a time (time A) of dog engagement between the first dog elements D1 and the second dog element D2.

In the reference example, the power reduction process is started at a time earlier than time t12, based on the relative position difference between the first dog elements D1 and the second dog elements D2. Consequently, the output torque decreases at an earlier time than that of the present embodiment. As a result, the dog engagement is established at time B.

On the contrary, with the control device 8 of the present embodiment, the dog engagement is established at time A, which is earlier than time B of the reference example. In addition, with the control device 8 of the present embodiment, the drive torque PO of the driving wheel after the dog engagement has a peak value lower than that of the drive torque PO' of the reference example.

### [Second Embodiment]

The following will describe the second embodiment of the present invention.

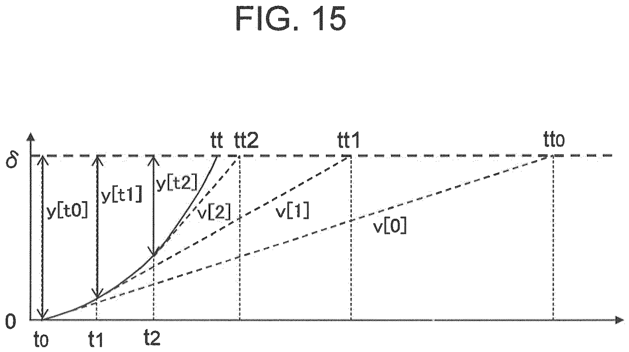

FIG. 15 is a time chart, related to a vehicle of the second embodiment, for explaining how dog engagement is estimated.

A control device 8 of the second dog element uses an input shaft speed detector 27 to obtain a relative rotational position between first dog elements D1 and second dog elements D2. Based on the relative rotational position, the control device 8 controls a time to start at least one of a power reduction process or a power increase process.

More specifically, in a process for detecting an output torque from a drive source (S14 in FIG. 6), the control device 8 obtains a rotational speed of an input shaft 20 from the input shaft speed detector 27. In a process for obtaining a dog engagement estimated time (S15 in FIG. 6), the control device 8 obtains the relative rotational position between the first dog elements D1 and the second dog elements D2.

For example, the control device 8 calculates a rotational speed of the first dog elements D1 based on a rotational speed of the input shaft 20 obtained from the input shaft speed detector 27. In addition, the control device 8 calculates a rotational speed of the second dog elements D2 based on a rotational speed of the input shaft 20 obtained before the state is switched to the acceleration state. The control device 8 also calculates a relative rotational speed. For example, integrating the rotational speed yields a rotational position. The control device 8 calculates the relative rotational position based on the rotational positions of the first dog elements D1 and the second dog elements D2. Thus, the relative rotational position is obtained from the rotational speeds, and the time to start the process is controlled based on the relative rotational position thus obtained. In this manner, it is possible to control the start of the process by simple calculation. The rotational speed of the second dog elements D2 may alternatively be obtained with another speed detector provided to the output shaft 30, for example.

In FIG. 15, the horizontal axis indicates times of events such as detection and dog engagement. FIG. 15 shows dog engagement estimation performed when obtaining of a relative rotational position is performed three times repeatedly. The process for obtaining the dog engagement estimated time is conducted three times at time t0, time t1, and time t2.

In FIG. 15, the vertical axis indicates a relative rotational position. The relative rotational position increases from zero along with relative movement. The relative rotational position δ indicates a position at which dog engagement is established. Distances to the dog engagement are denoted by y[t], y[t1], and y[t2].

In FIG. 15, a solid line indicates an example of an actual relative position that changes with a lapse of time.

A relative rotational position obtained based on detection performed at time t0 is zero. In a period prior to time t0, the first dog elements D1 and the second dog elements D2 do not start relative movement yet. A distance y[t0] to the dog engagement is equal to a distance δ, which corresponds to backlash. At time t0, the first dog elements D1 and the second dog elements D2 start relative movement. A relative rotational speed detected at time t0 is v[0]. For example, in a case where a time of the dog engagement is estimated based on the relative rotational speed v[0] at time t0, tt0 is obtained as an estimated time of the dog engagement.

A relative rotational speed detected at time t1 is v[1]. A distance to the dog engagement obtained based on the relative rotational speed is y[t1]. For example, in a case where a time of the dog engagement is estimated based on the relative rotational speed v[1] at time t1, tt1 is obtained as an estimated time of the dog engagement.

A distance to the dog engagement obtained based on detection performed at time t2 is y[t2]. For example, in a case where a time of the dog engagement is estimated based on the relative rotational speed v[2] at time t2, tt2 is obtained as an estimated time of the dog engagement.

The distance to the dog engagement decreases with a lapse of time. If a difference between the obtained relative rotational position and δ corresponding to the backlash is lower than a predetermined reference value, the control device 8 determines that the process start time has arrived (Yes in S17 in FIG. 6), and starts the power reduction process (S18 in FIG. 6).

The processes described above are applicable also to the processes (S24 to S27 in FIG. 6) for the power increase process (S28 in FIG. 6).

Except for those described above, the processes and configurations of the present embodiment are identical to the corresponding processes and configurations of the first embodiment.

FIG. 9 shows Qt' indicating an example of a time period until the establishment of dog engagement, the time period being obtained based on a relative rotational speed and a relative rotational position given by the process of the present embodiment. The time period Qt' until the dog engagement indicates a time period obtained by conversion performed with the relative rotational speed and relative rotational position having been detected.

In the present embodiment, the power reduction process is started based on the relative rotational position between the first dog elements D1 and the second dog elements D2. The relative rotational position is obtained with the input shaft speed detector 27.

In the present embodiment, the power reduction process is started based on the relative rotational position. Therefore, after a change occurs in the relative rotational position, i.e., after time t11 in FIG. 9, it becomes possible to perform estimation for starting the power reduction process. In the case of the example indicated by Qt' in FIG. 9, the power reduction process is started at time t13, which is later than time t12. In addition, the process of the present embodiment starts the power reduction process based on the relative rotational position. Therefore, in some cases, the process of the present embodiment may not easily deal with dog members provided to have small backlash therebetween or a manipulation for sudden acceleration.

However, according to the present embodiment, the power reduction process is started at a time equal to or prior to a time at which the non-transmission state is switched to the acceleration transmission state, as well as in the first embodiment. In addition, according to the present embodiment, the power reduction process ends after the time at which the non-transmission state is switched to the acceleration transmission state. Thus, according to the present embodiment, the process for the power reduction is not performed for a long period prior to the dog engagement in order to suppress a shock to the vehicle.

### [Third Embodiment]

The following will describe a third embodiment of the present invention.

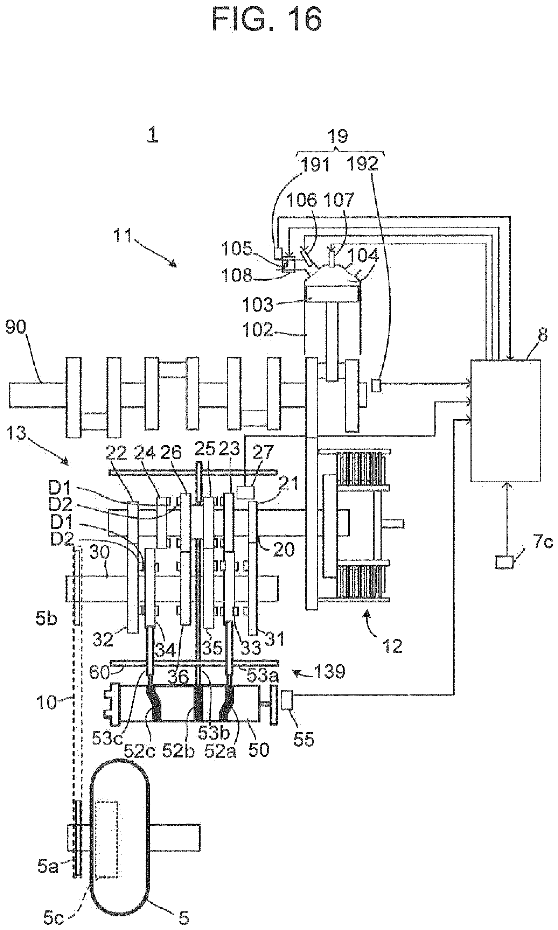

FIG. 16 is a view illustrating a schematic structure of a vehicle according to a third embodiment of the present invention.

The vehicle of the third embodiment includes a stepped transmission device different from those of the first and second embodiments. Except for the stepped transmission device, the third embodiment have features identical to the corresponding features of the first and second embodiments. Thus, the drawings and reference signs identical to those of the first embodiment are used to explain the third embodiment.

In a stepped transmission device 13 included in a vehicle 1 of the third embodiment, some of driving gears (21 to 26) are released from their engaged states. In the stepped transmission device 13 of the present embodiment, at least one of driven gears (31 to 36) is constantly engaged with a corresponding one of the driving gears (21 to 26), similarly to the first embodiment. The stepped transmission device 13 of the present embodiment does not include dog rings such as those illustrated in FIG. 1. First dog elements D1 and second dog elements D2 are provided to only either of the driven gears (31 to 36) and the driven gears (31 to 36).

Among the driving gears (21 to 26), a fifth-gear-stage driving gear 25 and a sixth-gear-stage driving gear 26 are movable in an axial direction of an input shaft 20. The fifth-gear-stage driving gear 25 and the sixth-gear-stage driving gear 26 move in an integrated manner in conjunction with movement of the shift fork 53b in the axial direction.

Among the driven gears (31 to 36), a third-gear-stage driven gear 33 and a fourth-gear-stage driven gear 34 are movable in the axial direction of the input shaft 20. For example, as a result of movement of the fourth-gear-stage driven gear 34, dog engagement is established between first dog elements D1 on the fourth-gear-stage driven gear 34 and second dog elements D2 on the second-gear-stage driven gear 32, which is adjacent to the fourth-gear-stage driven gear 34. Namely, the fourth-gear-stage driven gear 34 and the second-gear-stage driven gear 32 are engaged with each other. Consequently, power is transmitted from the input shaft 20 to the output shaft 30 via the second-gear-stage driving gear 22, the second-gear-stage driven gear 32, and the fourth-gear-stage driven gear 34. Then, engagement between the fourth-gear-stage driven gear 34 and the second-gear-stage driving gear 22 is released.

Also in the present embodiment, dog engagement is established between the first dog elements D1 and the second dog elements D2 while maintaining backlash therebetween. Thus, a power increase process and a power reduction process is executed by the control device 8 of the present embodiment. Also in the present embodiment, by performing the power increase process or the power reduction process, it is possible to suppress a shock by a drive torque caused by an angular momentum of a driven gear and the like having been accelerated or decelerated in the non-transmission state.

### Reference Signs List

- 1: vehicle
- 5: driving wheel (driven member)
- 8: control device
- 11: drive source
- 12: clutch
- 13: stepped transmission device
- 19: torque detector
- 20: input shaft
- 21 to 26: driving gear
- 30: output shaft
- 31 to 36: driven gear
- 37a to 37c: dog ring
- 55: gear stage detector
- 90: power shaft
- 138: mechanism for dog engagement with backlash
- 139: gear-stage setting mechanism
- 191: throttle opening detector
- 192: power shaft speed detector
- D1: first dog element (first transmission member)
- D2: second dog element (second transmission member)

## Claims

1. A vehicle comprising:
a drive source (11);
a driven member (5) configured to be driven by the drive source (11) to cause the vehicle to run;
a first transmission member (D 1) and a second transmission member (D2) disposed in a power transmission path extending from the drive source (11) to the driven member (5), the first transmission member (D1) and the second transmission member (D2) being provided to have backlash therebetween and being rotatable relative to each other, the first transmission member (D 1) and the second transmission member (D2) being engageable with each other to allow transmission of power therebetween; and
a control device (8) configured to execute at least one of a power reduction process or a power increase process,
the power reduction process being performed for reducing a transmission torque transmitted between the first transmission member (D 1) and the second transmission member (D2) when a non-transmission state, where the first transmission member (D 1) is separated from the second transmission member (D2) in a circumferential direction and power transmission is not allowed, is switched to an acceleration transmission state, where engagement between the first transmission member (D 1) and the second transmission member (D2) is established as a result of contact between the first transmission member (D 1) and the second transmission member (D2) in the circumferential direction and power transmission in an acceleration direction is allowed,
the power increase process being performed for increasing the transmission torque when the non-transmission state is switched to a deceleration transmission state, where power transmission in a deceleration direction is allowed as a result of the engagement,
wherein the control device (8) is configured to control a time to start the at least one of the power reduction process or the power increase process so that the time is equal to or prior to a time at which the non-transmission state is switched to the acceleration transmission state or to the deceleration transmission state,
wherein the control device (8) is configured to control a time to end the at least one of the power reduction process or the power increase process so that the time is set later than a time at which the non-transmission state is switched to the acceleration transmission state or to the deceleration transmission state,
**characterized in that** the control device (8) is configured to start the at least one of the power reduction process or the power increase process after a timing when the deceleration transmission state or the acceleration transmission state is switched to the non-transmission state.

2. The vehicle according to claim 1, wherein
the control device (8) is configured to execute at least one of
a process of controlling, in the power reduction process, at least one of an amount of the transmission torque to be reduced by the power reduction process or a time to end the power reduction process, based on speeds of the first transmission member (D1) and the second transmission member (D2) coming in contact with each other at the time of the engagement, or
a process of controlling, in the power increase process, at least one of an amount of the transmission torque to be increased by the power increase process or a time to end the power increase process, based on speeds of the first transmission member (D1) and the second transmission member (D2) coming in contact with each other at the time of the engagement.

3. The vehicle according to claim 1 or 2, further comprising:
a stepped transmission device (13) having a plurality of gear stages; and
a gear stage detector (55) configured to detect a gear stage set by the stepped transmission device (13), wherein
the control device (8) is configured to execute at least one of
a process of controlling, in the power reduction process, at least one of an amount of the transmission torque to be reduced by the power reduction process or a time to end the at least one of the power reduction process or the power increase process, based on the gear stage detected by the gear stage detector (55), or
a process of controlling, in the power increase process, at least one of an amount of the transmission torque to be increased by the power increase process or a time to end the at least one of the power reduction process or the power increase process, based on the gear stage detected by the gear stage detector (55).

4. The vehicle according to any one of claims 1 to 3, further comprising
a torque detector (19) configured to detect a torque-related amount related to the transmission torque, wherein
the control device (8) is configured to execute at least one of
a process of controlling, in the power reduction process, at least one of an amount of the transmission torque to be reduced by the power reduction process or a time to start the at least one of the power reduction process or the power increase process, based on the torque-related amount detected by the torque detector (19), or
a process of controlling, in the power increase process, at least one of an amount of the transmission torque to be increased by the power increase process or a time to start the at least one of the power reduction process or the power increase process, based on the torque-related amount detected by the torque detector (19).

5. The vehicle according to claim 4, wherein
the control device (8) is configured to calculate, based on the torque-related amount detected by the torque detector (19), a time period until the time of the engagement established as a result of the contact between the first transmission member (D 1) and the second transmission member (D2) in the circumferential direction, and to determine a time to start the at least one of the power reduction process or the power increase process based on the time period thus calculated.

6. The vehicle according to any one of claims 1 to 5, wherein
the control device (8) is configured to obtain a relative rotational position between the first transmission member (D 1) and the second transmission member (D2), and to control the time to start the at least one of the power reduction process or the power increase process based on the relative rotational position.

7. The vehicle according to claim 6, further comprising
a rotational speed detector configured to detect information related to a rotational speed of, among a power input shaft and a power output shaft related to the first transmission member (D1) and the second transmission member (D2), at least the power input shaft, wherein
the control device (8) is configured to perform a calculation to obtain the relative rotational position based on the information related to the rotational speed of the power input shaft.

8. The vehicle according to any one of claims 1 to 7, further comprising
a rotational speed detector configured to detect information related to a rotational speed of, among a power input shaft and a power output shaft related to the first transmission member (D1) and the second transmission member (D2), at least the power input shaft, wherein
after the control device (8) starts at least one of the power reduction process or the power increase process, the control device (8) is configured to
determine a time to end the power reduction process using the information detected by the rotational speed detector so as to_end the at least one of the power reduction process or the power increase process prior to a time at which a rotational speed of the power input shaft and a speed of the vehicle synchronize with each other or a time at which a rate of change in rotational speed of the power input shaft and a rate of change in speed of the vehicle synchronize with each other.

9. The vehicle according to any one of claims 1 to 8, wherein
the control device (8) is configured to change a torque correction pattern based on speeds of the first transmission member (D1) and the second transmission member (D2) coming in contact with each other at the time of the engagement between the first transmission member (D1) and the second transmission member (D2), the torque correction pattern including a time period for which the at least one of the power reduction process or the power increase process is performed and an amount of change over time in the transmission torque caused by the at least one of the power reduction process or the power increase process during the time period.

10. The vehicle according to any one of claims 1 to 9, further comprising:
a stepped transmission device (13) including
an input shaft (20) disposed rotatably and configured to receive power inputted thereto,
an output shaft (30) disposed rotatably on an axis being in parallel with the input shaft (20),
driving gears (21-26) provided to the input shaft (20), the driving gears (21-26) being rotatable always in conjunction with the input shaft (20) or rotatable relative to the input shaft (20), the driving gears (21-26) being associated with their corresponding gear stages,
driven gears (31-36) provided to the output shaft (30), the driven gears (31-36) being rotatable always in conjunction with the output shaft (30) or rotatable relative to the output shaft (30), the driven gears (31-36) being engageable with their corresponding driving gears (21-26), at least one of the driven gears (31-36) being constantly engaged with a corresponding one of the driving gears (21-26), and
a gear-stage setting mechanism (139) configured to mechanically select, from among patterns of power transmission from the input shaft (20) to the output shaft (30) via the driving gears (21-26) and the driven gears (31-36), an effective pattern of power transmission via a driving gear (21-26) and a driven gear (31-36) each associated with one of the gear stages, wherein
the gear-stage setting mechanism (139) includes a mechanism for dog engagement with backlash, the mechanism including first dog elements serving as the first transmission member (D1) and second dog elements serving as the second transmission member (D2), the first dog elements and the second dog elements being associated with their corresponding gear stages, the first dog elements being provided on the driving gears (21-26) or the driven gears (31-36), the second dog elements each being configured to come in contact with a corresponding one of the first dog elements in the circumferential direction while having backlash with respect to the corresponding one of the first dog elements, dog engagement established as a result of the contact between the first dog elements and the second dog elements in the circumferential direction mechanically selecting, as being effective, power transmitted toward the driving gears (21-26) via the input shaft (20) or power transmitted from the driven gears (31-36) toward the output shaft (30), and
the drive source (11) is configured to output power that is to be supplied to the input shaft (20) of the stepped transmission device (13).

## Patentansprüche

1. Ein Fahrzeug, das folgende Merkmale aufweist:
eine Antriebsquelle (11);
ein angetriebenes Bauglied (5), das dazu konfiguriert ist, von der Antriebsquelle (11) angetrieben zu werden, um zu bewirken, dass sich das Fahrzeug bewegt;
ein erstes Übertragungsbauglied (D1) und ein zweites Übertragungsbauglied (D2), die in einem Leistungsübertragungspfad angeordnet sind, die sich von der Antriebsquelle (11) zu dem angetriebenen Bauglied (5) erstreckt, wobei das erste Antriebsbauglied (D1) und das zweite Antriebsbauglied (D2) dahingehend bereitgestellt sind, ein Spiel dazwischen aufzuweisen, und relativ zueinander drehbar sind, wobei das erste Antriebsbauglied (D1) und das zweite Antriebsbauglied (D2) miteinander in Eingriff gebracht werden können, um eine Leistungsübertragung dazwischen zu ermöglichen; und
eine Steuervorrichtung (8), die dazu konfiguriert ist, zumindest einen aus einem Leistungsreduzierungsprozess oder einem Leistungssteigerungsprozess auszuführen,
wobei der Leistungsreduzierungsprozess ausgeführt wird zum Reduzieren eines Übertragungsdrehmoments, das zwischen dem ersten Antriebsbauglied (D1) und dem zweiten Antriebsbauglied (D2) übertragen wird, wenn ein Nichtübertragungszustand, in dem das erste Übertragungsbauglied (D1) von dem zweiten Übertragungsbauglied (D2) in einer Umfangsrichtung getrennt ist und eine Leistungsübertragung nicht erlaubt ist, umgeschaltet wird zu einem Beschleunigungsübertragungszustand, in dem eine Ineingriffnahme zwischen dem ersten Übertragungsbauglied (D1) und dem zweiten Übertragungsbauglied (D2) als Folge eines Kontakts zwischen dem ersten Übertragungsbauglied (D1) und dem zweiten Übertragungsbauglied (D2) in der Umfangsrichtung hergestellt wird und eine Leistungsübertragung in einer Beschleunigungsrichtung ermöglicht wird,
wobei der Leistungssteigerungsprozess ausgeführt wird zum Erhöhen des Übertragungsdrehmoments, wenn der Nichtübertragungszustand umgeschaltet wird zu einem Verzögerungsübertragungszustand, in dem eine Leistungsübertragung in einer Verzögerungsrichtung als Folge der Ineingriffnahme ermöglicht wird,
wobei die Steuervorrichtung (8) dazu konfiguriert ist, einen Zeitpunkt zum Starten des zumindest einen des Leistungsreduzierungsprozesses oder des Leistungssteigerungsprozesses zu steuern, so dass der Zeitpunkt einem Zeitpunkt gleicht oder vor diesem liegt, zu dem der Nichtübertragungszustand zu dem Beschleunigungsübertragungszustand oder zu dem Verzögerungsübertragungszustand umgeschaltet wird,
wobei die Steuervorrichtung (8) dazu konfiguriert ist, einen Zeitpunkt zum Beenden des zumindest einen des Leistungsreduzierungsprozesses oder des Leistungssteigerungsprozesses zu steuern, so dass der Zeitpunkt dahingehend eingestellt wird, später zu sein ein Zeitpunkt, zu dem der Nichtübertragungszustand zu dem Beschleunigungsübertragungszustand oder zu dem Verzögerungsübertragungszustand umgeschaltet wird,
**dadurch gekennzeichnet, dass** die Steuervorrichtung (8) dazu konfiguriert ist, den zumindest einen des Leistungsreduzierungsprozesses oder des Leistungssteigerungsprozesses nach einer Zeitsteuerung zu starten, wenn der Verzögerungsübertragungszustand oder der Beschleunigungsübertragungszustand zu dem Nichtübertragungszustand umgeschaltet wird.

2. Das Fahrzeug gemäß Anspruch 1, wobei
die Steuervorrichtung (8) dazu konfiguriert ist, zumindest einen auszuführen aus
einem Prozess zum Steuern, in dem Leistungsreduzierungsprozess, eines Betrages des Übertragungsdrehmoments, das durch den Leistungsreduzierungsprozess zu reduzieren ist, und/oder eines Zeitpunkts zum Beenden des Leistungsreduzierungsprozesses, auf der Basis von Geschwindigkeiten des ersten Übertragungsbauglieds (D1) und des zweiten Übertragungsbauglieds (D2), die zum Zeitpunkt der Ineingriffnahme in Kontakt miteinander treten, oder
einem Prozess zum Steuern, in dem Leistungssteigerungsprozess, eines Betrags des Übertragungsdrehmoments, das durch den Leistungssteigerungsprozess zu erhöhen ist, und/oder eines Zeitpunkts zum Beenden des Leistungssteigerungsprozesses, auf der Basis von Geschwindigkeiten des ersten Übertragungsbauglieds (D1) und des zweiten Übertragungsbauglieds (D2), die zum Zeitpunkt der Ineingriffnahme in Kontakt miteinander treten.

3. Das Fahrzeug gemäß Anspruch 1 oder 2, das ferner folgende Merkmale aufweist:
eine Stufengetriebevorrichtung (13) mit einer Mehrzahl von Gangstufen; und
einen Gangstufendetektor (55), der dazu konfiguriert ist, eine Gangstufe zu detektieren, die von der Stufengetriebevorrichtung (13) eingestellt wird, wobei
die Steuervorrichtung (8) dazu konfiguriert ist, zumindest einen auszuführen aus:
einem Prozess zum Steuern, in dem Leistungsreduzierungsprozess, eines Betrags des Übertragungsdrehmoments, das durch den Leistungsreduzierungsprozess zu reduzieren ist, und/oder eines Zeitpunkts zum Beenden des zumindest einen des Leistungsreduzierungsprozesses oder des Leistungssteigerungsprozesses, auf der Basis der Gangstufe, die durch den Gangstufendetektor (55) detektiert wird, oder
einem Prozess zum Steuern, in dem Leistungssteigerungsprozess, eines Betrags des Übertragungsdrehmoments, das durch den Leistungssteigerungsprozess zu erhöhen ist, und/oder eines Zeitpunkts zum Beenden des zumindest einen des Leistungsreduzierungsprozesses oder des Leistungssteigerungsprozesses, auf der Basis der Getriebestufe, die von dem Getriebestufendetektor (55) detektiert wird.

4. Das Fahrzeug gemäß einem der Ansprüche 1 bis 3, das ferner Folgendes aufweist:
einen Drehmomentdetektor (19), der dazu konfiguriert ist, einen Drehmoment-bezogenen Betrag zu detektieren, der sich auf das Übertragungsdrehmoment bezieht,
wobei die Steuervorrichtung (8) dazu konfiguriert ist, zumindest einen auszuführen aus:
einem Prozess zum Steuern, in dem Leistungsreduzierungsprozess, eines Betrags des Übertragungsdrehmoments, das durch den Leistungsreduzierungsprozess zu reduzieren ist, und/oder eines Zeitpunkts zum Starten des zumindest einen des Leistungsreduzierungsprozesses oder des Leistungssteigerungsprozesses, auf der Basis des Drehmoment-bezogenen Betrags, der durch den Drehmomentdetektor (19) detektiert wird, oder
einem Prozess zum Steuern, in dem Leistungssteigerungsprozess, eines Betrags des Übertragungsdrehmoments, das durch den Leistungssteigerungsprozess zu erhöhen ist, und/oder eines Zeitpunkts zum Starten des zumindest einen des Leistungsreduzierungsprozesses oder des Leistungssteigerungsprozesses, auf der Basis des Drehmoment-bezogenen Betrags, der durch den Drehmomentdetektor (19) detektiert wird.

5. Das Fahrzeug gemäß Anspruch 4, wobei
die Steuervorrichtung (8) dazu konfiguriert ist, auf der Basis des Drehmoment-bezogenen Betrags, der durch den Drehmomentdetektor (19) detektiert wird, einen Zeitraum bis zum Zeitpunkt der Ineingriffnahme, die als Folge des Kontakts zwischen dem ersten Übertragungsbauglied (D1) und dem zweiten Übertragungsbauglied (D2) in der Umfangsrichtung hergestellt wird, zu berechnen und einen Zeitpunkt zum Starten des zumindest einen des Leistungsreduzierungsprozesses oder des Leistungssteigerungsprozesses auf der Basis des so berechneten Zeitraums zu bestimmen.

6. Die Vorrichtung gemäß einem der Ansprüche 1 bis 5, wobei
die Steuervorrichtung (8) dazu konfiguriert ist, eine relative Drehposition zu dem ersten Übertragungsbauglied (D1) und dem zweiten Übertragungsbauglied (D2) zu erhalten, und den Zeitpunkt zum Starten des zumindest einen des Leistungsreduzierungsprozesses oder des Leistungssteigerungsprozesses auf der Basis der relativen Drehposition zu steuern.

7. Das Fahrzeug gemäß Anspruch 6, das ferner folgende Merkmale aufweist:
einen Drehzahldetektor, der dazu konfiguriert ist, Informationen in Bezug auf eine Drehzahl von, aus einer Leistungseingangswelle und einer Leistungsausgangswelle bezüglich dem ersten Übertragungsbauglied (D1) und dem zweiten Übertragungsbauglied (D2), zumindest der Leistungseingangswelle zu detektieren, wobei
die Steuervorrichtung (8) dazu konfiguriert ist, eine Berechnung auszuführen, um die relative Drehposition auf der Basis der Informationen bezüglich der Drehzahl der Leistungseingangswelle zu erhalten.

8. Das Fahrzeug gemäß einem der Ansprüche 1 bis 7, das ferner folgende Merkmale aufweist:
einen Drehzahldetektor, der dazu konfiguriert ist, Informationen bezüglich einer Drehzahl von, aus einer Leistungseingangswelle und einer Leistungsausgangswelle bezüglich des ersten Übertragungsbauglieds (D1) und des zweiten Übertragungsbauglieds (D2), zumindest der Leistungseingangswelle zu detektieren, wobei
nachdem die Steuervorrichtung (8) zumindest einen des Leistungsreduzierungsprozesses oder des Leistungssteigerungsprozesses startet, die Steuervorrichtung (8) dazu konfiguriert ist:
einen Zeitpunkt zum Beenden des Leistungsreduzierungsprozesses unter Verwendung der Informationen zu bestimmen, die von dem Drehzahldetektor detektiert werden, um den zumindest einen des Leistungsreduzierungsprozesses oder des Leistungssteigerungsprozesses vor einem Zeitpunkt, zu dem eine Drehzahl der Leistungseingangswelle und eine Geschwindigkeit des Fahrzeugs miteinander synchronisieren, oder vor einem Zeitpunkt, zu dem eine Änderungsrate der Drehzahl der Leistungseingangswelle oder eine Änderungsrate der Geschwindigkeit des Fahrzeugs miteinander synchronisieren, zu beenden.

9. Das Fahrzeug gemäß einem der Ansprüche 1 bis 8, wobei
die Steuervorrichtung (8) dazu konfiguriert ist, ein Drehmomentkorrekturmuster auf der Basis von Geschwindigkeiten des ersten Übertragungsbauglieds (D1) und des zweiten Übertragungsbauglieds (D2) zu ändern, die zum Zeitpunkt der Ineingriffnahme zwischen dem ersten Übertragungsbauglied (D1) und dem zweiten Übertragungsbauglied (D2) in Kontakt miteinander treten, wobei das Drehmomentkorrekturmuster einen Zeitraum, für den der zumindest eine des Leistungsreduzierungsprozesses oder des Leistungssteigerungsprozesses ausgeführt wird, und einen Änderungsbetrag im Zeitverlauf des Übertragungsdrehmoments umfasst, verursacht durch den zumindest einen des Leistungsreduzierungsprozesses oder des Leistungssteigerungsprozesses während des Zeitraums.

10. Das Fahrzeug gemäß einem der Ansprüche 1 bis 9, das ferner folgende Merkmale aufweist:
eine Stufengetriebevorrichtung (13), die Folgendes umfasst:
eine Eingangswelle (20), die drehbar angeordnet ist und dazu konfiguriert ist, an dieselbe abgegebene Leistung zu empfangen,
eine Ausgangswelle (30), die drehbar auf einer Achse angeordnet ist, die parallel zu der Eingangswelle (20) liegt,
Antriebsgetrieberäder (21-26), mit denen die Eingangswelle (20) versehen ist, wobei die Antriebsgetrieberäder (21-26) immer in Verbindung mit der Eingangswelle (20) drehbar sind oder relativ zu der Eingangswelle (20) drehbar sind, wobei die Antriebsgetrieberäder (21-26) den jeweiligen Gangstufen zugeordnet sind,
angetriebene Räder (31-36), mit denen die Ausgangswelle (30) versehen ist, wobei die angetriebenen Räder (31-36) immer in Verbindung mit der Ausgangswelle (30) drehbar sind oder relativ zu der Ausgangswelle (30) drehbar sind, wobei die angetriebenen Räder (31-36) mit ihren entsprechenden Antriebsrädern (21-26) in Eingriff gebracht werden können, wobei zumindest eines der angetriebenen Räder (31-36) konstant mit einem entsprechenden der Antriebsräder (21-26) in Eingriff steht, und
einen Gangstufeneinstellmechanismus (139), der dazu konfiguriert ist, aus Mustern einer Leistungsübertragung von der Eingangswelle (20) zu der Ausgangswelle (30) über die Antriebsgetrieberäder (21-26) und die angetriebenen Räder (31-36) ein effektives Muster einer Leistungsübertragung über ein Antriebsgetrieberad (21-26) und ein angetriebenes Getrieberad (31-36), die jeweils einer der Gangstufen zugeordnet sind, auszuwählen, wobei
der Gangstufeneinstellmechanismus (139) einen Mechanismus zur Klauenineingriffnahme mit Spiel umfasst, wobei der Mechanismus erste Klauenelemente, die als das erste Übertragungsbauglied (D1) dienen, und zweite Klauenelemente umfasst, die als das zweite Übertragungsbauglied (D2) dienen, wobei die ersten Klauenelemente und die zweiten Klauenelemente zu ihren entsprechenden Gangstufen zugeordnet sind, wobei die ersten Klauenelemente auf den Antriebsgetrieberädern (21-26) oder den angetriebenen Getrieberädern (31-36) bereitgestellt sind, wobei die zweiten Klauenelemente jeweils dahingehend konfiguriert sind, in Kontakt mit einem entsprechenden der ersten Klauenelemente in der Umfangsrichtung mit Spiel in Bezug auf das entsprechende eine der ersten Klauenelemente zu treten, wobei eine Klauenineingriffnahme, die als Folge des Kontakts zwischen den ersten Klauenelementen und den zweiten Klauenelementen in der Umfangsrichtung hergestellt wird, eine Leistung, die hin zu den Antriebsgetrieberädern (21-26) über die Eingangswelle (20) übertragen wird oder eine Leistung, die von den angetriebenen Getrieberädern (31, 36) hin zu der Ausgangswelle (30) übertragen wird, mechanisch auswählt, als effektiv zu sein, und
wobei die Antriebsquelle (11) dazu konfiguriert ist, Leistung auszugeben, die der Eingangswelle (20) der Stufengetriebevorrichtung (13) zugeführt wird.

## Revendications

1. Véhicule comprenant:
une source d'entraînement (11);
un élément entraîné (5) configuré pour être entraîné par la source d'entraînement (11) pour faire circuler le véhicule;
un premier élément de transmission (D1) et un deuxième élément de transmission (D2) disposés dans un trajet de transmission de puissance s'étendant de la source d'entraînement (11) à l'élément entraîné (5), le premier élément de transmission (D1) et le deuxième élément de transmission (D2) étant prévus de manière à présenter un jeu entre eux et pouvant tourner l'un par rapport à l'autre, le premier élément de transmission (D1) et le deuxième élément de transmission (D2) pouvant venir en prise l'un avec l'autre pour permettre la transmission de puissance entre eux; et
un dispositif de commande (8) configuré pour exécuter au moins l'un parmi un processus de réduction de puissance ou un processus d'augmentation de puissance,
le processus de réduction de puissance étant effectué pour réduire un couple de transmission transmis entre le premier élément de transmission (D1) et le deuxième élément de transmission (D2) lorsqu'un état de non-transmission, dans lequel le premier élément de transmission (D1) est séparé du deuxième élément de transmission (D2) dans une direction circonférentielle et la transmission de puissance n'est pas permise, est commuté à un état de transmission en accélération dans lequel la venue en prise entre le premier élément de transmission (D1) et le deuxième élément de transmission (D2) est établi suite au contact entre le premier élément de transmission (D1) et le deuxième élément de transmission (D2) dans la direction circonférentielle et au fait que la transmission de puissance dans une direction d'accélération est permise,
le processus d'augmentation de puissance étant effectué pour augmenter le couple de transmission lorsque l'état de non-transmission est commuté à un état de transmission en décélération où la transmission de puissance dans une direction de décélération est permise suite à la venue en prise,
dans lequel le dispositif de commande (8) est configuré pour commander un moment pour commencer l'au moins un parmi le processus de réduction de puissance ou le processus d'augmentation de puissance de sorte que le moment soit égal ou antérieur à un moment auquel l'état de non-transmission est commuté à l'état de transmission en accélération ou à l'état de transmission en décélération,
dans lequel le dispositif de commande (8) est configuré pour commander un moment pour terminer l'au moins un parmi le processus de réduction de puissance ou le processus d'augmentation de puissance de sorte que le moment soit établi après un moment auquel l'état de non-transmission soit commuté à l'état de transmission en accélération ou à l'état de transmission en décélération,
**caractérisé par le fait que** le dispositif de commande (8) est configuré pour commencer l'au moins un parmi le processus de réduction de puissance ou le processus d'augmentation de puissance après un moment où l'état de transmission en décélération ou l'état de transmission en accélération est commuté à l'état de non-transmission.

2. Véhicule selon la revendication 1, dans lequel
le dispositif de commande (8) est configuré pour exécuter au moins l'un parmi
un processus de commande, dans le processus de réduction de puissance, d'au moins l'un parmi une quantité du couple de transmission à réduire par le processus de réduction de puissance ou un moment pour terminer le processus de réduction de puissance, sur base des vitesses du premier élément de transmission (D1) et du deuxième élément de transmission (D2) venant en contact l'un avec l'autre au moment de la venue en prise, ou
un processus de commande, dans le processus d'augmentation de puissance, d'au moins l'un parmi une quantité du couple de transmission à augmenter par le processus d'augmentation de puissance ou un moment pour terminer le processus d'augmentation de puissance, sur base des vitesses du premier élément de transmission (D1) et du deuxième élément de transmission (D2) venant en contact l'un avec l'autre au moment de la venue en prise.

3. Véhicule selon la revendication 1 ou 2, comprenant par ailleurs:
un dispositif de transmission étagé (13) présentant une pluralité d'étages d'engrenage; et
un détecteur d'étage d'engrenage (55) configuré pour détecter un étage d'engrenage réglé par le dispositif de transmission étagé (13),
dans lequel
le dispositif de commande (8) est configuré pour exécuter au moins l'un parmi
un processus de commande, dans le processus de réduction de puissance, d'au moins l'un parmi une quantité du couple de transmission à réduire par le processus de réduction de puissance ou un moment pour terminer le processus de réduction de puissance ou le processus d'augmentation de puissance, sur base de l'étage d'engrenage détecté par le détecteur d'étage d'engrenage (55), ou
un processus de commande, dans le processus d'augmentation de puissance, d'au moins l'un parmi une quantité du couple de transmission devant être augmentée par le processus d'augmentation de puissance ou un moment pour terminer le processus de réduction de puissance ou le processus d'augmentation de puissance, sur base de l'étage d'engrenage détecté par le détecteur d'étage d'engrenage (55).

4. Véhicule selon l'une quelconque des revendications 1 à 3, comprenant par ailleurs
un détecteur de couple (19) configuré pour détecter une quantité relative au couple de transmission,
dans lequel
le dispositif de commande (8) est configuré pour exécuter au moins l'un parmi
un processus de commande, dans le processus de réduction de puissance, d'au moins l'un parmi une quantité du couple de transmission à réduire par le processus de réduction de puissance ou un moment pour commencer le processus de réduction de puissance ou le processus d'augmentation de puissance, sur base de la quantité relative au couple détectée par le détecteur de couple (19), ou
un processus de commande, dans le processus d'augmentation de puissance, d'au moins l'un parmi une quantité du couple de transmission devant être augmentée par le processus d'augmentation de puissance ou un moment pour commencer l'au moins un parmi le processus de réduction de puissance ou le processus d'augmentation de puissance, sur base de la quantité relative au couple détectée par le détecteur de couple (19).

5. Véhicule selon la revendication 4, dans lequel
le dispositif de commande (8) est configuré pour calculer, sur base de la quantité relative au couple détectée par le détecteur de couple (19), un laps de temps jusqu'au moment de la venue en prise établi suite au contact entre le premier élément de transmission (D1) et le deuxième élément de transmission (D2) dans la direction circonférentielle, et pour déterminer un moment pour commencer le processus de réduction de puissance ou le processus d'augmentation de puissance sur base du laps de temps ainsi calculé.

6. Véhicule selon l'une quelconque des revendications 1 à 5, dans lequel
le dispositif de commande (8) est configuré pour obtenir une position de rotation relative entre le premier élément de transmission (D1) et le deuxième élément de transmission (D2), et pour contrôler le moment pour commencer le processus de réduction de puissance ou le processus d'augmentation de puissance sur base de la position de rotation relative.

7. Véhicule selon la revendication 6, comprenant par ailleurs
un détecteur de vitesse de rotation configuré pour détecter l'information relative à une vitesse de rotation, parmi un arbre d'entrée de puissance et un arbre de sortie de puissance relatifs au premier élément de transmission (D1) et au deuxième élément de transmission (D2), au moins l'arbre d'entrée de puissance,
dans lequel
le dispositif de commande (8) est configuré pour effectuer un calcul pour obtenir la position de rotation relative sur base de l'information relative à la vitesse de rotation de l'arbre d'entrée de puissance.

8. Véhicule selon l'une quelconque des revendications 1 à 7, comprenant par ailleurs
un détecteur de vitesse de rotation configuré pour détecter l'information relative à une vitesse de rotation, parmi un arbre d'entrée de puissance et un arbre de sortie de puissance relatifs au premier élément de transmission (D1) et au deuxième élément de transmission (D2), au moins l'arbre d'entrée de puissance,
dans lequel
après que le dispositif de commande (8) commence au moins l'un parmi le processus de réduction de puissance et/ou le processus d'augmentation de puissance, le dispositif de commande (8) est configuré pour
déterminer un moment pour terminer le processus de réduction de puissance à l'aide de l'information détectée par le détecteur de vitesse de rotation de manière à terminer l'au moins un parmi le processus de réduction de puissance ou le processus d'augmentation de puissance avant un moment auquel une vitesse de rotation de l'arbre d'entrée de puissance et une vitesse du véhicule se synchronisent l'une avec l'autre ou un moment auquel un taux de changement de vitesse de rotation de l'arbre d'entrée de puissance et un taux de changement de vitesse du véhicule se synchronisent l'un avec l'autre.

9. Véhicule selon l'une quelconque des revendications 1 à 8, dans lequel
le dispositif de commande (8) est configuré pour modifier un modèle de correction de couple sur base des vitesses du premier élément de transmission (D1) et du deuxième élément de transmission (D2) venant en contact l'un avec l'autre au moment de la venue en prise entre le premier élément de transmission (D1) et le deuxième élément de transmission (D2), le modèle de correction de couple comportant un laps de temps pendant lequel est effectué l'au moins un parmi le processus de réduction de puissance ou le processus d'augmentation de puissance et une quantité de changement dans le temps dans le couple de transmission provoqué par l'au moins un parmi le processus de réduction de puissance ou le processus d'augmentation de puissance pendant le laps de temps.

10. Véhicule selon l'une quelconque des revendications 1 à 9, comprenant par ailleurs:
un dispositif de transmission étagé (13) comportant
un arbre d'entrée (20) disposé de manière rotative et configuré pour recevoir la puissance y entrée,
un arbre de sortie (30) disposé de manière rotative sur un axe qui est parallèle à l'arbre d'entrée (20),
des engrenages d'entraînement (21 à 26) prévus sur l'arbre d'entrée (20), les engrenages d'entraînement (21 à 26) pouvant tourner toujours ensemble avec l'arbre d'entrée (20) ou pouvant tourner par rapport à l'arbre d'entrée (20), les engrenages d'entraînement (21 à 26) étant associés à leurs étages d'engrenage correspondants,
des engrenages entraînés (31 à 36) prévus sur l'arbre de sortie (30), les engrenages entraînés (31 à 36) pouvant tourner toujours ensemble avec l'arbre de sortie (30) ou pouvant tourner par rapport à l'arbre de sortie (30), les engrenages entraînés (31 à 36) pouvant venir en prise avec leurs engrenages d'entraînement correspondants (21 à 26), au moins un des pignons entraînés (31 à 36) étant constamment en prise avec l'un correspondant parmi les pignons d'entraînement (21 à 26), et
un mécanisme de réglage d'étage d'engrenage (139) configuré pour sélectionner mécaniquement, parmi les modèles de transmission de puissance de l'arbre d'entrée (20) à l'arbre de sortie (30) par l'intermédiaire des engrenages d'entraînement (21 à 26) et des engrenages entraînés (31 à 36), un modèle efficace de transmission de puissance entraînés d'un engrenage d'entraînement (21 à 26) et d'un engrenage entraîné (31 à 36) associés, chacun, à l'un des étages d'engrenage,
dans lequel
le mécanisme de réglage d'étage d'engrenage (139) comporte un mécanisme pour la venue en prise avec un crabot avec un jeu, le mécanisme comportant des premiers éléments à crabot servant de premier élément de transmission (D1) et des deuxièmes éléments à crabot servant de deuxième élément de transmission (D2), les premiers éléments à crabot et les deuxièmes éléments à crabot étant associés à leurs étages d'engrenage correspondants, les premiers éléments à crabot étant prévus sur les engrenages d'entraînement (21 à 26) ou les engrenages entraînés (31 à 36), les deuxièmes éléments à crabot étant configurés, chacun, pour entrer en contact avec l'un correspondant des premiers éléments à crabot dans la direction circonférentielle tout en présentant un jeu par rapport à l'un correspondant des premiers éléments à crabot, venue en prise avec un crabot qui est établie suite au contact entre les premiers éléments à crabot et les deuxièmes éléments à crabot dans la circonférence direction en sélectionnant mécaniquement, comme étant efficace, la puissance transmise aux engrenages d'entraînement (21 à 26) par l'intermédiaire de l'arbre d'entrée (20) ou la puissance transmise des engrenages entraînés (31 à 36) à l'arbre de sortie (30), et
la source d'entraînement (11) est configurée pour sortir la puissance qui doit être alimentée vers l'arbre d'entrée (20) du dispositif de transmission étagé (13).
